# EUROPEAN PATENT APPLICATION

(11) **EP 4 166 815 A1**
(43) Date of publication of application: **19.04.2023**
(21) Application number: 21820972.4
(22) Date of filing: 11.06.2021
(51) Int. Cl.: F16H 9/06, F16H 53/02, F16H 55/36, F16H 1/16

(54) **VARIABLE PITCH PULLEY FOR BELT-PULLEY-TYPE CONTINUOUSLY VARIABLE TRANSMISSION, AND BELT-PULLEY-TYPE CONTINUOUSLY VARIABLE TRANSMISSION HAVING SAME**

(30) Priority: 11.06.2020 KR 20200070938
(71) Applicant: Moon, Kyoung Jin, Incheon 22000 (KR)
(72) Inventor: Moon, Kyoung Jin, Incheon 22000 (KR)
(74) Representative: Schmitt-Nilson Schraud Waibel Wohlfrom Patentanwälte Partnerschaft mbB
(86) International application number: PCT/KR2021/007356
(87) International publication number: WO 2021/251802

(57) **Abstract**

The present disclosure relates to a variable pitch pulley for a belt-pulley type continuously variable transmission, the variable pitch pulley being able to obtain a wide gear ratio range, and a belt-pulley type continuously variable transmission having the same. A spring pressed variable pitch pulley for a belt-pulley type continuously variable transmission according to an aspect of the present disclosure includes: a rotary shaft; a fixed sheave installed to be fixed to the rotary shaft; a moving sheave installed on the rotary shaft to face the fixed sheave such that a belt groove in which a belt is wound is formed between the moving sheave and the fixed sheave, the moving sheave including an inner sheave installed on an outer surface of the rotary shaft to be able to axially move, and an outer sheave installed to be radially stacked on the inner sheave and to be able to move in an axial direction of the rotary shaft with respect to the inner sheave; and a moving sheave-positioning unit determining relative positions of the inner sheave and the outer sheave by being coupled simultaneously to the inner sheave and the outer sheave in a first moving mode and by being coupled to only the outer sheave in a second moving mode to be able to perform, in response to tension variation of the belt by a shift control device of an adjustable shaft center-to-center distance shift type or fixed shaft center-to-center distance shift type, the first moving mode in which the inner sheave and the outer sheave are simultaneously moved in the axial direction of the rotary shaft, and the second moving mode in which the outer sheave is moved in the axial direction of the rotary shaft with respect to the inner sheave.

## Description

### [Technical Field]

The present disclosure relates to a belt-pulley type continuously variable transmission that can obtain a wide gear ratio range, a variable pitch pulley for a belt-pulley type continuously variable transmission and a structure thereof, and a spring pressed variable pitch pulley for a belt-pulley type continuously variable transmission.

### [Background Art]

A belt-pulley type continuously variable transmission, which is a kind of transmission, is easily manufactured as its structure is simple, so it is widely used for transportation and various machines.

A belt-pulley type continuously variable transmission is configured such that a belt is wound on a driving pulley installed on a driving shaft and a driven pulley installed on a driven shaft to transmit power from the driving shaft to the driven shaft, in which at least one of the driving pulley and the driven pulley is a variable pitch pulley capable of changing its pitch diameter.

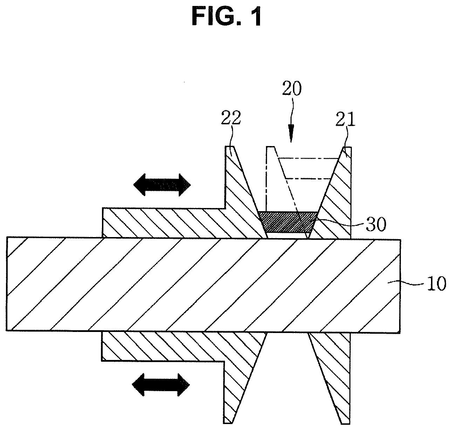

The variable pitch pulley of a belt-pulley type continuously variable transmission, as shown in FIG. 1, includes two sheaves 21 and 22 installed on a rotary shaft 10, with one pulley 20 divided into halves in a direction perpendicular to the axis of the rotary shaft, and is disposed with sheave surfaces facing each other.

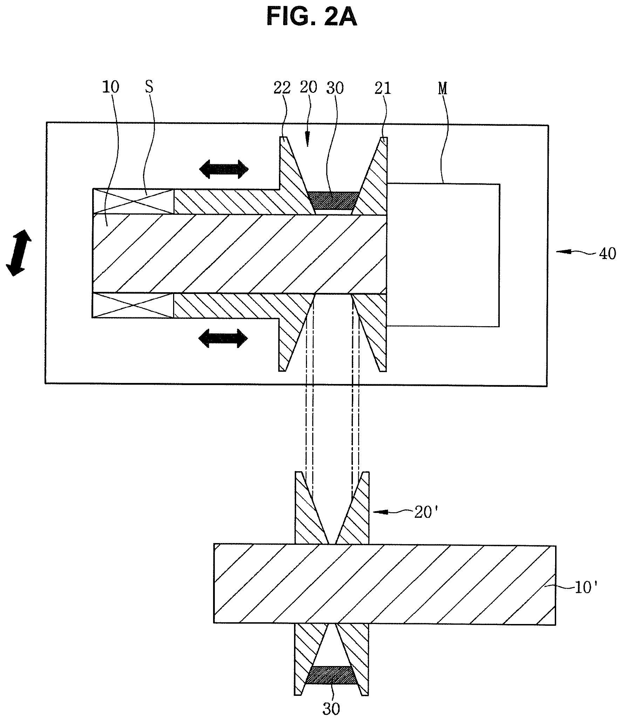

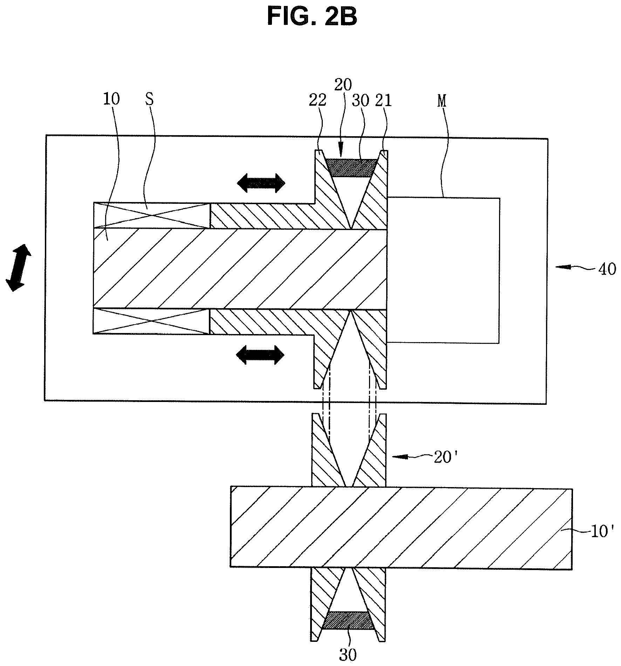

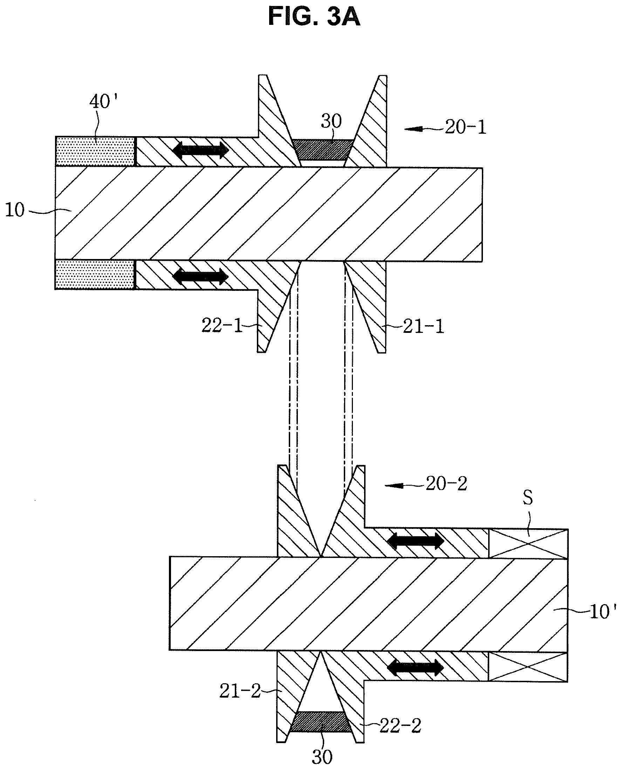

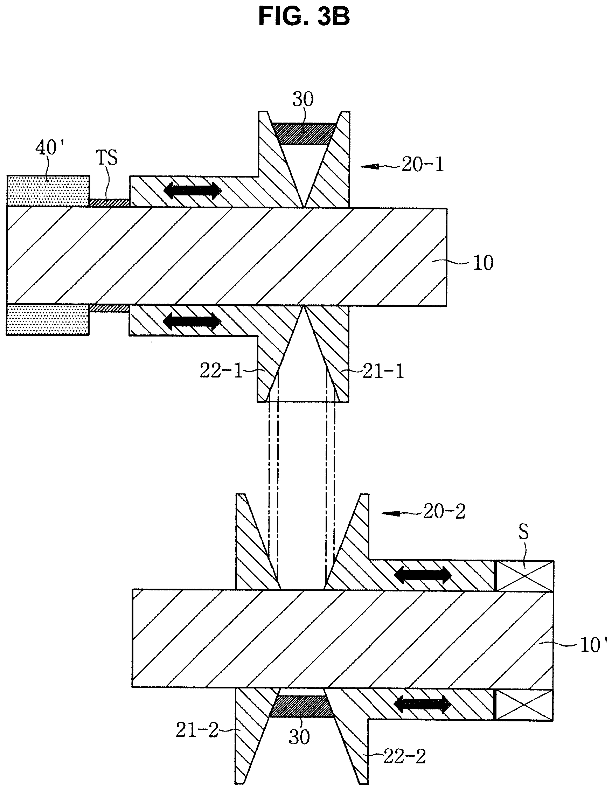

One of these two sheaves is a fixed sheave 21 fixed to the rotary shaft and the other one is a moving sheave 22 disposed to form a belt groove, in which a belt 30 is wound, between the moving sheave 22 and the fixed sheave 21 and forcibly moved in the axial direction of the rotary shaft by a shift control device (not shown) (reference numeral "40" in FIGS. 2a and 2b and reference numeral "40" in FIGS. 3a and 3b).

When the moving sheave 22 of the variable pitch pulley having this configuration is moved toward or away from the fixed sheave 10 along the rotary shaft 10 by the shift control device, the pitch diameter of the variable pitch pulley is changed by variation of the width of the belt groove formed between the fixed sheave 21 and the moving sheave 22. The shift control device, as well known in the art, is classified into two types of:
- "Adjustable shaft center-to-center distance shift type" and
- "Fixed shaft center-to-center distance shift type".

While in an "adjustable shaft center-to-center distance shift type", the distance between a driving shaft and a driven shaft changes in shifting, in a "fixed shaft center-to-center distance shift type", the distance between a driving shaft and a driven shaft does not change in shifting.

For example, a shift control device (refer to reference numeral "40" in FIGS. 2a and 2b) of the "adjustable shaft center-to-center distance shift type" is applied to the case in which a variable pitch pulley is installed on the driving shaft of a belt-pulley type continuously variable transmission and a invariable pitch pulley (a pulley incapable of changing its pitch diameter, that is, a pulley having a fixed pitch diameter) is installed on the driven shaft thereof (that is, the case in which only one variable pitch pulley is installed in the belt-pulley type continuously variable transmission, a so-called "single variable pitch pulley").

However, a shift control device (refer to reference numeral "40" in FIGS. 3a and 3b) of the "fixed shaft center-to-center distance shift type" is applied to the case in which each variable pitch pulley is installed on both the driving shaft and the driven shaft of the belt-pulley type continuously variable transmission (that is, the case in which two variable pitch pulleys are installed in the belt-pulley type continuously variable transmission, a so-called "double variable pitch pulley").

Hereafter, a belt-pulley type continuously variable transmission that is driven by a shift control device of the "adjustable shaft center-to-center distance shift type" and a belt-pulley type continuously variable transmission driven by a shift control device of the "fixed shaft center-to-center distance shift type" are individually described in a little bit more detail.

First, referring to FIGS. 2a and 2b, a belt-pulley type continuously variable transmission, in which a single variable pitch pulley is installed and a moving sheave is driven by a shift control device of the "adjustable shaft center-to-center distance shift type" includes: a variable pitch pulley 20 composed of a first rotary shaft 10, a fixed sheave 21 installed on the first rotary shaft 10, a moving sheave 22 installed on the first rotary shaft 10 to form a belt groove between the moving sheave 22 and the fixed sheave 21 and moved in the axial direction of the first rotary shaft 10 with respect to the fixed sheave 21 by a shift control device 40 of the "adjustable shaft center-to-center distance shift type", and an elastic member S supported by the first rotary shaft 10 and pressing the moving sheave 22 toward the fixed sheave 21 in the axial direction of the first rotary shaft 10; an invariable pitch pulley 20' including a second rotary shaft 10' disposed in parallel with the first rotary shaft 10, installed on the second rotary shaft 10', and having a belt groove on the outer circumferential surface; and a belt 30 wound in the belt groove of the variable pitch pulley 20 and the belt groove of the invariable pitch pulley 20' and transmitting a rotation force of the variable pitch pulley 20 to the invariable pitch pulley 20'.

In this case, the first rotary shaft 10 may be a driving shaft or may be connected to a driving shaft and the second rotary shaft 10' may be a driven shaft or may be connected to a driven shaft.

The moving sheave 22, as well known in the art, is configured to be able to move in the axial direction of the first rotary shaft 10 but to be restricted in circumferential movement, that is, rotational movement.

For the characteristic of the moving sheave 22 moving with respect to the first rotary shaft 10 described above, a key, spline, or ball spline (not shown) well known in the art is formed on the outer circumferential surface of the first rotary shaft 10 and the inner circumferential surface of the moving sheave 22, and the same structures are not described below because they are apparent.

Since the moving sheave of the variable pitch pulley 20 is constantly pressed toward the fixed sheave 21 by the elastic member S, for example, a spring, the variable pitch pulley 20 is called a "spring pressed variable pitch pulley". (Though will be described below, the "spring pressed variable pitch pulley 20" may be applied in the form of being installed on the second rotary shaft 10' corresponding to a driven shaft rather than a driving shaft in the belt-pulley type continuously variable transmission that is driven by a shift control device 40' of the "adjustable shaft center-to-center distance shift type".)

The elastic member S applies tension to the belt 30 by constantly pressing the moving sheave 22 toward the fixed sheave 21 and is deformed such as compressed or extended by immediately responding to tension variation of the belt 30 due to movement of the moving sheave 22 by the shift control device 40, thereby serving to cause the moving sheave 22 to be moved.

A well-known moving bed 40, on which a driving source M (for example, a motor M) coupled to the first rotary shaft 10 is mounted, may be an example of the shift control device 40 of the "adjustable shaft center-to-center distance shift type", so that the shaft center-to-center distance between the first rotary shaft 10 and the second rotary shaft 10' changes by moving the mounted motor M.

The moving bed 40 may be controlled by a motor, a handle (or a lever), etc. such that the first rotary shaft 10 is moved parallel toward or away from the second rotary shaft 10', and it is a well-known technology in the field of the belt-pulley type continuously variable transmission, so it is not described in detail.

Shifting is performed as follows in the belt-pulley type continuously variable transmission to which the shift control device 40, of the "adjustable shaft center-to-center distance shift type", having this configuration has been applied.

First, as shown in FIG. 2a, before the belt-pulley type continuously variable transmission is operated, the first rotary shaft 10 is moved as far as possible from the second rotary shaft 10' by the moving bed 40, and accordingly, the moving sheave 22 moves to the left in the figure and presses the elastic member S, and the pitch diameter of the spring pressed variable pitch pulley 20 is minimized, whereby a low-speed gear ratio is implemented.

Thereafter, as shown in FIG. 2b, the first rotary shaft 10 is rotated by the driving source M, and in this state, when the moving bed 40 is moved toward the second rotary shaft 10', the shaft center-to-center distance between the first rotary shaft 10 and the second rotary shaft 10' decreases.

Accordingly, tension of the belt 30 is about to decrease, but the elastic member S maintains the tension of the belt 30 by pressing the moving sheave 22 toward the fixed sheave 21 in immediate response to tension variation of the belt 30 and pushes the belt 30 wound in the belt groove of the variable pitch pulley 20 outward in the radial direction of the variable pitch pulley 20.

As described above, as the moving sheave 22 is driven, the pitch diameter of the spring pressed variable pitch pulley 20 installed on the first rotary shaft 10 that is a driving shaft increases, and the diameter of the invariable pitch pulley 20' installed on the second rotary shaft 10' that is a driven shaft does not change, so up-shift is implemented.

However, after up-shift has been performed, as shown in FIG. 2b, when the first rotary shaft 10 is moved away from the second rotary shaft 10' by the moving bed 40, as shown in FIG. 2a, down-shift is implemented as those skilled in the art can understand.

Hereafter, a belt-pulley type continuously variable transmission in which a double variable pitch pulley is installed and that is driven by a shift control device 40' of the "fixed shaft center-to-center distance shift type" is described. The belt-pulley type continuously variable transmission includes: a first variable pitch pulley 20-1 including a first rotary shaft 10, a first fixed sheave 21-1 installed on the first rotary shaft 10, and a first moving sheave 22-1 disposed to form a belt groove between the first moving sheave 22-1 and the first fixed sheave 21-1, and moved along the first rotary shaft 10 with respect to the first fixed sheave 21-1 by the shift control device 40' of the "fixed shaft center-to-center distance shift type"; a second variable pitch pulley 20-2 composed of a second rotary shaft 10' disposed parallel to the first rotary shaft 10, a second fixed sheave 21-2 installed on the second rotary shaft 10' and disposed such that the sheave surface thereof faces the opposite direction to the sheave surface of the first fixed sheave 21-1, a second moving sheave 22-2 disposed to form a belt groove between the second moving sheave 22-2 and the second fixed sheave 21-2 and installed to move with respect to the second fixed sheave 21-2 along the second rotary shaft 10' in the same direction as the movement direction of the first moving sheave 22-1 when the first moving sheave 22-1 is moved, and an elastic member S supported by the second rotary shaft 10' and pressing the second moving sheave 22-2 toward the second fixed sheave 21-2; and a belt 30 wound in the belt groove of the first variable pitch pulley 20-1 and the belt groove of the second variable pitch pulley 20-2 and transmitting a rotation force of the first variable pitch pulley 20-1 to the second variable pitch pulley 20-2.

In this case, the first rotary shaft 10 may be a driving shaft or may be connected to a driving shaft and the second rotary shaft 10' may be a driven shaft or may be connected to a driven shaft.

In this configuration, in the first variable pitch pulley 20-1 at a driving pulley side and the second variable pitch pulley 20-2 at a driven pulley side, as shown in FIGS. 3a and 3b, the second fixed sheave 21-2 and the second moving sheave 22-2 are disposed in opposite directions, that is, symmetrically to the first fixed sheave 21-1 and the first moving sheave 22-1.

That is, the first moving sheave 22-1 of the first variable pitch pulley 20-1 is disposed at the left side of the first fixed sheave 21-1 on the first rotary shaft 10, but the second moving sheave 22-2 of the second variable pitch pulley 20-2 is disposed at the right side of the second fixed sheave 21-2 of the second rotary shaft 10'.

The symmetric arrangement of the first variable pitch pulley 20-1 and the second variable pitch pulley 20-2, as apparent to those skilled in the art, is for optimally transmitting power between the first variable pitch pulley 20-1 and the second variable pitch pulley 20-2 by moving the first moving sheave 22-1 on the first rotary shaft 10 and the second moving sheave 22-2 on the second rotary shaft 10' simultaneously in the same direction in shifting (that is, to the right from FIG. 3a into FIG. 3b in up-shift and to the left from FIG. 3b into FIG. 3a in down-shift) such that the belt 30 stays perpendicular to the first rotary shaft 10 and the second rotary shaft 10'.

Meanwhile, since the second moving sheave 22-2 is constantly pressed toward the second fixed sheave 21-2 by the elastic member S, for example, a spring, the second variable pitch pulley 20-2 is called a "spring pressed variable pitch pulley". (As described above, it should be noted that it was stated that a "spring pressed variable pitch pulley" would be applied in the type of being installed on a driven shaft rather than a driving shaft in a belt-pulley type continuously variable transmission that is driven by of a shift control device of the "fixed shaft center-to-center distance shift type", in advance in the description of the related art of the present disclosure about a belt-pulley type continuously variable transmission that is driven by the shift control device 40' of the "fixed shaft center-to-center distance shift type".)

The elastic member S applies tension to the belt 30 by constantly pressing the second moving sheave 22-2 toward the second fixed sheave 21-2 and is deformed to be compressed or extended by immediately responding to tension variation of the belt 30 due to movement of the first moving sheave 22-1, thereby serving to cause the moving sheave 22 to be moved.

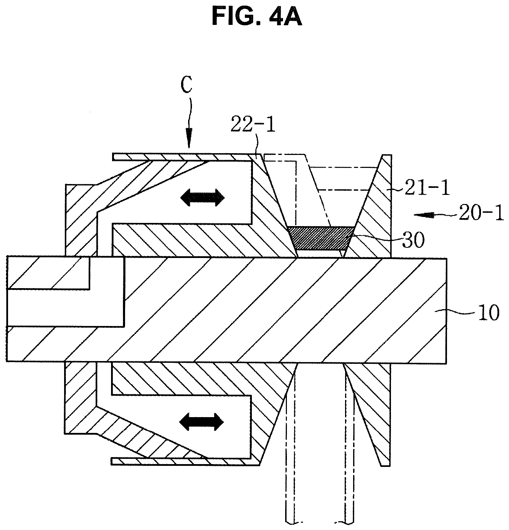

Meanwhile, the shift control device 40' of the "fixed shaft center-to-center distance shift type" is supported by first rotary shaft 10 and a main body (not shown), is configured to forcibly move the first moving sheave 22-1 along the first rotary shaft 10, and may be driven in the well-known control type shown in FIGS. 4a to 4c in accordance with the design characteristics of the belt-pulley type continuously variable transmission to be used.

That is, a moving sheave on a first rotary shaft can be controlled in movement in a first rotational shaft direction by a shift control device of the "fixed shaft center-to-center distance shift type". For example, as shown in FIGS. 4a to 4c, the shift control device may be a hydraulic control device, a rotation control device and a centrifugal control device.

### - FIG. 4a: Hydraulic control

Movement of the first moving sheave 22-1 in the axial direction of the first rotary shaft 10 is controlled using a shift control device such as a hydraulic cylinder C.

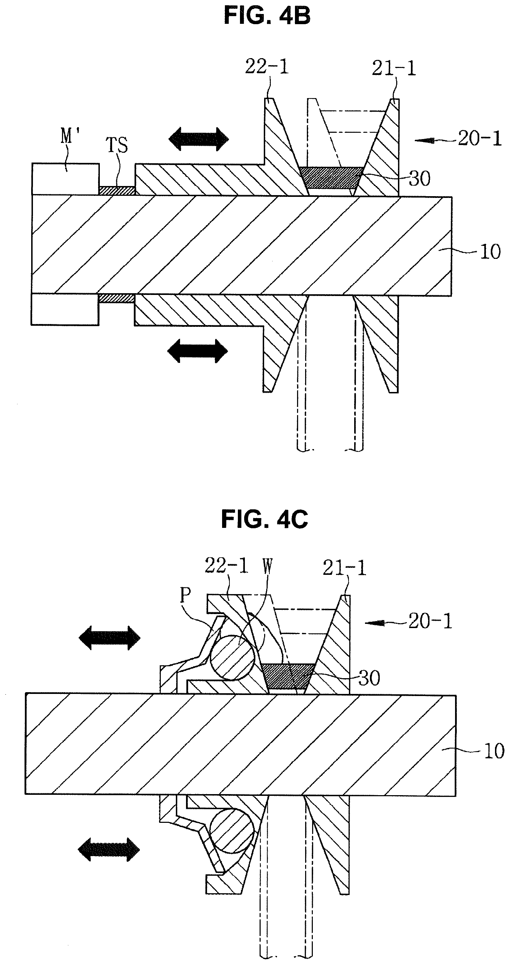

### - FIG. 4b: Rotation control

A separate transmission shaft TS is thread-fastened to the first moving sheave 22-1 by a rotation control device such as a manual dial/handle or a motor M' and a rotational motion of the transmission shaft TS is mechanically converted into a straight motion, thereby controlling movement of the first moving sheave 22-1 in the axial direction of the first rotary shaft 10.

### - FIG. 4c: Centrifugal control

When a weight W (e.g., a roller or a ball) installed on the rear surface of the first moving sheave 22-1 to rotate with the first moving sheave 22-1 moves in the radial direction of the first rotary shaft 10 along a slope plate P, movement of the first moving sheave 22-1 is controlled using a component force that is generated in the axial direction of the first rotary shaft 10 by the weight W.

The belt-pulley type continuously variable transmission to which the shift control device 40' of the "fixed shaft center-to-center distance shift type" having this configuration has been applied performs shifting, as shown in FIGS. 3a and 3b (a shift control device shown in FIG. 4b was exemplarily applied in FIGS. 3a and 3b).

First, before the belt-pulley type continuously variable transmission shown in FIG. 3a is operated, the first moving sheave 22-1 is moved as far as possible from the first fixed sheave 21-1 by the shift control device 40' of the "fixed shaft center-to-center distance shift type", so the pitch diameter of the first variable pitch pulley 20-1 is minimized, but the second moving sheave 22-2 is pressed as close as possible to the second fixed sheave 21-2 by extension of the elastic member S, so the pitch diameter of the second variable pitch pulley 20-1 is maximized, whereby a low-speed gear ratio is implemented.

Thereafter, while the first rotary shaft 1 is rotated by a driving source not shown, when the shift control device 40' is driven and the first moving sheave 22-1 is moved toward the first fixed sheave 21-1, as shown in FIG. 3b, the pitch diameter of the first variable pitch pulley 20-1 increases, and accordingly, the belt 30 wound in the belt groove of the first variable pitch pulley 20-1 is moved outward in the radial direction of the first variable pitch pulley 20-1.

At the same time, tension of the belt increases, so the belt 30 presses the elastic member S through the second moving sheave 22-2, thereby moving the second moving sheave 22-2 away from the second fixed sheave 21-2.

Accordingly, the pitch diameter of the second variable pitch pulley 20-2 decreases and the belt 30 wound in the belt groove of the second variable pitch pulley 20-2 is moved into the belt groove inside in the radial direction of the second variable pitch pulley 20-2.

As described above, the pitch diameter of the first variable pitch pulley 20-1 installed on the first rotary shaft 10 corresponding to a driving shaft increases and the pitch diameter of the second variable pitch pulley 20-2 installed on the second rotary shaft 10' corresponding to a driven shaft decreases, whereby up-shift is implemented.

However, when the first moving sheave 22-1 is moved by the shift control device 40' as in FIG. 3a, with up-shift implemented as in FIG. 3b, that is, when the first moving sheave 22-1 is moved away from the first fixed sheave 21-1, down-shift is implemented, as those skilled in the art can understand.

Meanwhile, when a gear ratio range increases in a belt-pulley type continuously variable transmission, acceleration performance is improved, high-speed driving is possible, and power can be optimally used, so there has been a continuous request to increase the gear ratio range of a belt-pulley type continuously variable transmission.

In order to answer such a request to increase a gear ratio range, a belt-pulley type continuously variable transmission of several embodiments that can increase a gear ratio range by making axial displacement of a moving sheave larger than the width of a belt has been disclosed in U.S. Patent Application Publication No. US 2017/0261078 A1 (published on September 14, 2017).

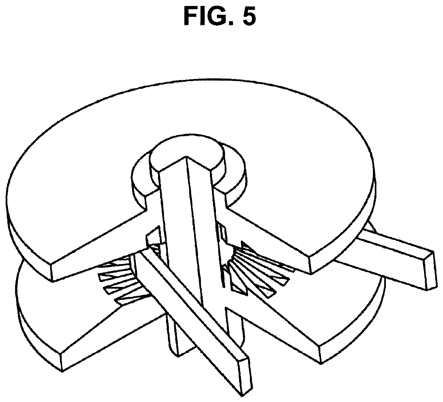

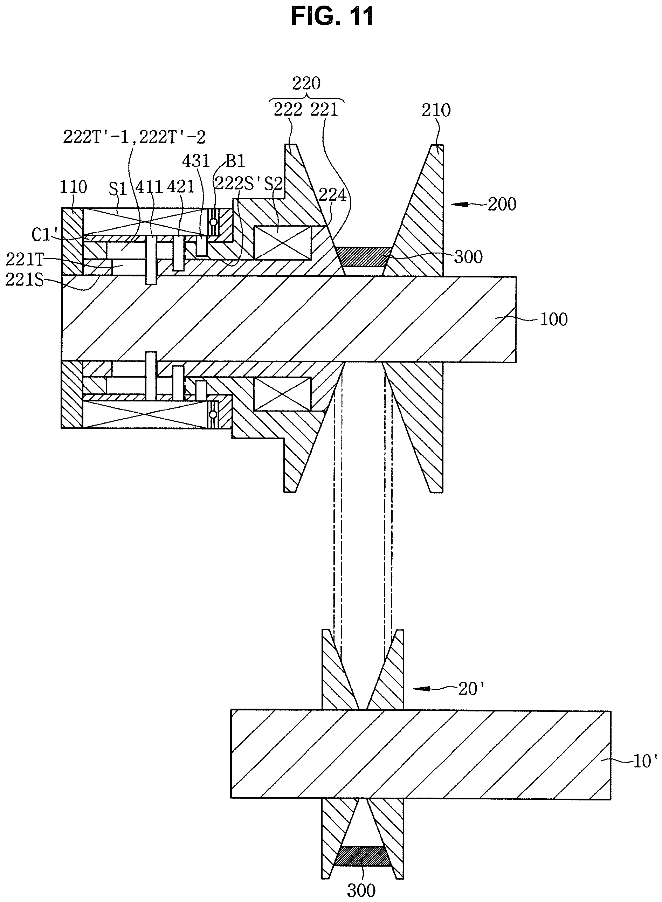

A variable pitch pulley configured such that the sheave surfaces of two sheaves facing each other can be coupled like clasping hands has been disclosed in the publication document (an embodiment corresponding to FIG. 11 of the publication document is shown in FIG. 5 in this specification).

The variable pitch pulley shown in FIG. 5 is a so-called interlacing sheave or interdigitating sheave type of variable pitch pulley, which is a technology well known in the art.

According to an interlacing sheave type of variable pitch pulley, when a moving sheave is moved with respect to a fixed sheave in the axial direction of a rotary shaft, interference does not occur between the fixed sheave and the moving sheave, and accordingly, it is possible to make the axial movement distance of the moving sheave larger than the width of a belt, so it is possible to increase a gear ratio range.

However, the interlacing sheave type of variable pitch pulley has a problem that wear of the belt increases in driving due to several grooves formed on the sheave surfaces, so not only does the lifespan of the belt decrease, but driving noise is also generated and the belt is not smoothly moved in shifting.

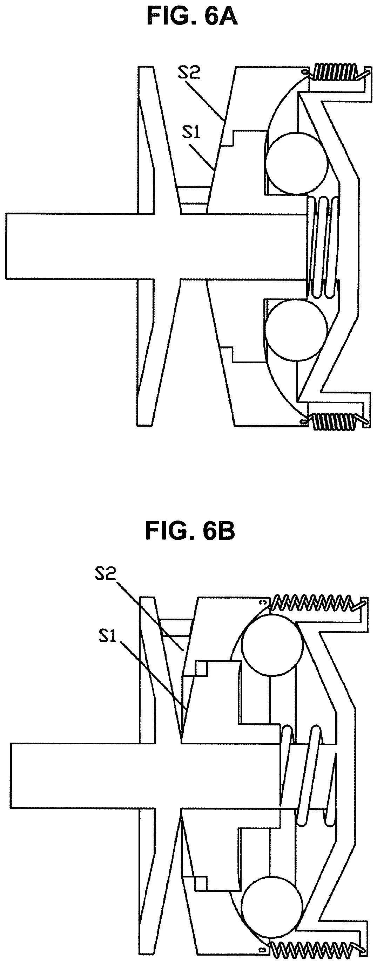

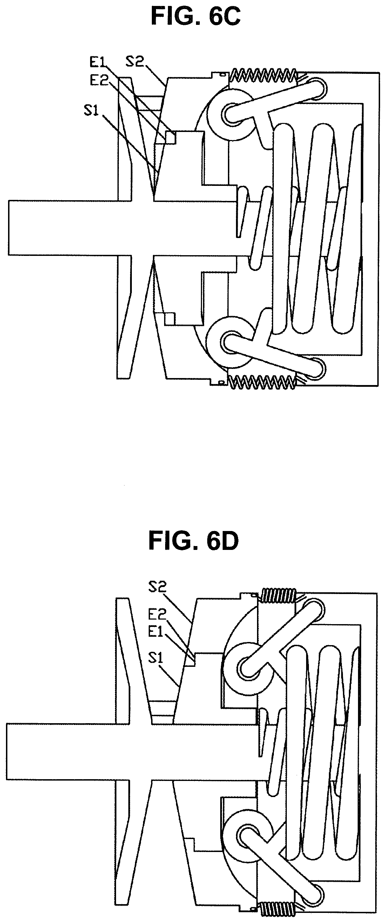

Further, a conical half composed of an inner section and an outer section in a shape like axially dividing the moving sheave of the variable pitch pulley described in the related art of the present disclosure into two parts in the radial direction is shown in FIGS. 27 to 32 of the publication document (see FIGS. 6a to 6f in the present specification).

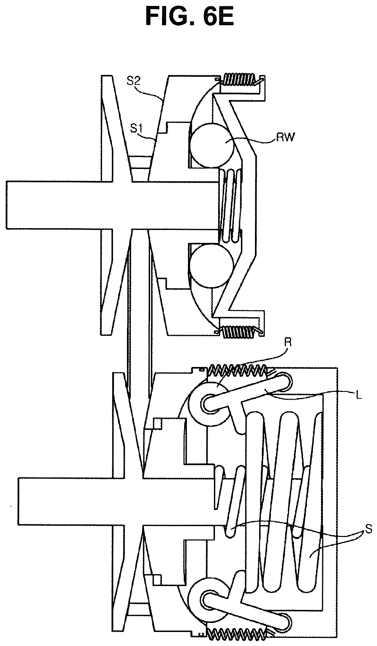

In particular, the belt-pulley type continuously variable transmission exemplified in FIG. 31 of the publication document (see FIG. 6e of the present specification) is configured, in terms of the structure, to be driven in the "fixed shaft center-to-center distance shift type" with a double variable pitch pulley type in which a variable pitch pulley is installed on each of a driving shaft and a driven shaft. [In this case, it should be noted that, as sufficiently described in the related art of the present disclosure (see FIGS. 3a and 3b), a variable pitch pulley installed on a driven shaft in a belt-pulley type continuously variable transmission that is driven in the "fixed shaft center-to-center distance shift type" should be configured as a spring pressed variable pitch pulley in which a moving sheave is constantly pressed toward a fixed sheave by an elastic member, that is, a spring to apply appropriate tension to a belt.]

However, the configuration of FIG. 31 of the publication document (see FIG. 6e of the present specification) has a structural problem that tension is applied to the belt not only by a spring force pressing the conical half corresponding to the variable pitch pulley installed on the driven shaft, that is, the inner section and the outer section, but also excessive tension is applied to the belt by the sum of a spring force by several springs S and a centrifugal force by a link L and a roller R.

Further, a centrifugal force that is applied by a roller weight RW on the driving shaft and a centrifugal force that is generated by the link L and the roller R on the driven shaft further increase tension in the belt.

Accordingly, since this configuration applies excessive tension to the belt when transmitting power, it has problems such as reduction of movement transferring efficiency, damage to the belt, or acceleration of wear.

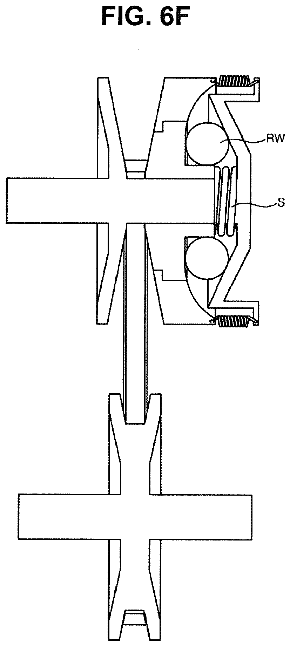

These problems are generated also in FIG. 32 of the publication document (see FIG. 6f of the present specification).

It can be seen that the continuously variable transmission shown in FIG. 32 of the publication document (see FIG. 6f of the present specification) is a belt-pulley type continuously variable transmission that is driven in the "adjustable shaft center-to-center distance shift type" in terms of the structure because a variable pitch pulley is installed on a driving shaft that is a first rotary shaft and an invariable pitch pulley is installed in a driven shaft that is a second rotary shaft (see Para. [0084] in the publication document). [Meanwhile, it should be noted that, as sufficiently described in the related art of the present disclosure (see FIGS. 2a and 2b), the variable pitch pulley installed on the driving shaft in a belt-pulley type continuously variable transmission that is driven in the "adjustable shaft center-to-center distance shift type" is configured as the spring pressed variable pitch pulley 20 in which the moving sheave 22 is constantly pressed toward the fixed sheave 21 by only a spring force to apply appropriate tension to the belt 30.]

However, since the configuration of FIG. 32 (see FIG. 6f of the present specification) has a structure in which the conical half corresponding to the variable pitch pulley installed on the driving shaft, that is, the inner section and the outer section are driven by a spring force by the spring S and a centrifugal force by the roller weight RW, the configuration has a problem that excessive tension is applied to the belt and shifting may not be performed well.

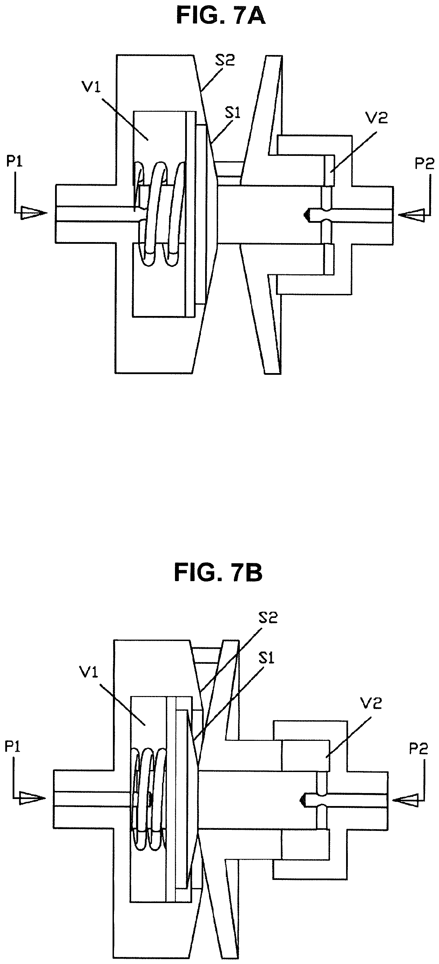

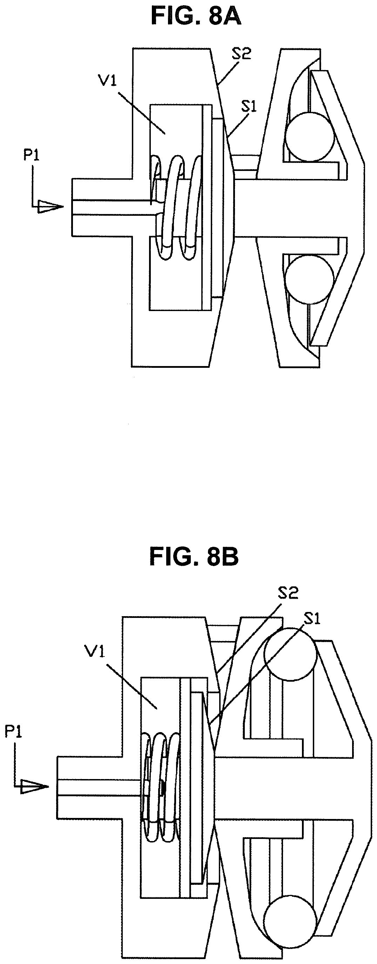

Further, the publication document discloses a hydraulic control type for controlling a conical half composed of an inner section and an outer section in FIGS. 23 to 24 (see FIGS. 7a to 7b of the present specification), a hydraulic-mechanical control type and a hydraulic-electromagnetic control type in FIGS. 25 to 26 (see FIGS. 8a and 8b of the present specification) (see Paras. [0099] and [0100] of the publication document), and a mechanical control type in FIGS. 27 to 32 (see FIGS. 6a to 6f of the present specification), but does not disclose a technology of a rotation control type that can the most precisely control the conical half (see FIGS. 3a, 3b, and 4b of the present specification).

Further, when hydraulic pressure is used to drive the embodiments shown in FIGS. 23 to 26 of the publication document (see FIGS. 7a to 8b of the present specification), as apparent to those skilled in the art, a working fluid, a hydraulic pump, a hydraulic control pump, a hydraulic pipe, etc. are required, so there is not only a problem of making a shift control device complicated and increasing the size thereof, but also a defect that it is impossible to use a rubber belt that should not come in contact with a working fluid as a power transmission belt.

Further, the publication document proposes that the inner section and the outer section should be formed without a step (stepless) at the interface so that the belt can smoothly move on the interface of the inner section and the outer section, but not only does this requires very precise machining at the edges of the inner section and the outer section, but the edges are also sharpened, so when a gap is formed at the interface due to tension of the belt, interference is rather generated between the belt and the interface, whereby there may be a problem that the belt is not moved well or the belt may be damaged.

Besides the publication document described above, there is Korean Patent Application Publication No. 10-2004-0033893 in which a multi-stage shift pulley for an automatic transmission has been disclosed. The multi-stage shift pulley includes: a fixed plate is coupled to a rotary shaft to integrally rotate therewith; a shift gear that is composed of a plurality of coaxial stage gears, which has teeth inclined around front ends in a wedge shape and being able to axially sequentially move forward and backward, is coupled to the rotary shaft, and rotates integrally with the driving shaft; a chain belt that has teeth formed on the inner surface to correspond to the teeth of the stage gears and is selectively wound on any one of the stage gears of the shift gear, in close contact with the fixed plate to be able to radially slide; and a shifting unit that selectively engages any one of the stage gears of the shift gear with the chain belt by pushing the selected stage gear from the rear surface of the shift gear.

The multi-stage shift pulley is configured such that the stage gears are selectively axially moved forward by a cam rotating on the rear surfaces thereof and the teeth at the front end thereof are engaged with the chain belt, whereby a gear ratio and a torque ratio can be changed.

However, since the multi-stage shift pulley includes a camshaft rotating in a direction perpendicular to the rotary shaft on the rear surface of the transmission as the shifting unit, there is a problem that the structure of the cam is complicated and the structure and control of a driving element for driving the cam are also complicated.

### [Disclosure]

### [Technical Problem]

An objective of the present disclosure is to provide a belt-pulley type continuously variable transmission that can obtain a wide gear ratio range, a variable pitch pulley for a belt-pulley type continuously variable transmission and a structure thereof, and a spring pressed variable pitch pulley for a belt-pulley type continuously variable transmission.

Another objective of the present disclosure is to provide a variable pitch pulley structure for a belt-pulley type continuously variable transmission that can reduce wear of a belt, decrease noise due to friction with the belt, and can smoothly shift gears.

Another objective of the present disclosure is to provide a spring pressed variable pitch pulley for a belt-pulley type continuously variable transmission in which shifting is implemented in a "fixed shaft center-to-center distance shift type" or an "adjustable shaft center-to-center distance shift type", a moving sheave composed of an inner sheave and an outer sheave is constantly pressed toward a fixed sheave by only a spring force through a simple configuration, thereby applying appropriate tension to a belt; and a belt-pulley type continuously variable transmission to which this pulley has been applied.

Another objective of the present disclosure is to provide a variable pitch pulley for a belt-pulley type continuously variable transmission that is configured such that the shifting of a moving sheave composed of an inner sheave and an outer sheave is performed by rotation control in the "fixed shaft center-to-center distance shift type" having simple configuration instead of hydraulic control having complicated configuration; and belt-pulley type continuously variable transmission to which the variable pitch pulley has been applied.

Another objective of the present disclosure is to provide a structure of a variable pitch pulley for a belt-pulley type continuously variable transmission for minimizing damage to a belt when the belt moves on the interface between an outer sheave and an inner sheave.

Objectives of the present disclosure are not limited to the objectives described above and other objectives not stated will be understood by those skilled in the art through the following description.

### [Technical Solution]

In order to achieve the objectives of the present disclosure described above, first to third embodiments are described as follows.

Claims 1 to 17, claims 50 to 55, and claims 69 to 74 that relate to the first embodiment of the present disclosure are associated with a spring pressed variable pitch pulley for a belt-pulley type continuously variable transmission.

The spring pressed variable pitch pulley for a belt-pulley type continuously variable transmission may include:
a rotary shaft;
a fixed sheave fixed to the rotary shaft;
a moving sheave installed on the rotary shaft to face the fixed sheave such that a belt groove in which a belt is wound is formed between the moving sheave and the fixed sheave, the moving sheave including an inner sheave installed on an outer surface of the rotary shaft to be able to axially move, and an outer sheave installed to be radially stacked on the inner sheave and to be able to move in an axial direction of the rotary shaft with respect to the inner sheave; and a moving sheave-positioning unit determining relative positions of the inner sheave and the outer sheave by being coupled simultaneously to the inner sheave and the outer sheave in a first moving mode and by being coupled to only the outer sheave in a second moving mode to be able to perform, in response to tension variation of the belt by a shift control device, the first moving mode in which the inner sheave and the outer sheave are simultaneously moved in the axial direction of the rotary shaft, and the second moving mode in which the outer sheave is moved in the axial direction of the rotary shaft with respect to the inner sheave.

In this configuration, the first moving mode is performed when the belt comes into contact with a sheave surface of the inner sheave and a sheave surface of the fixed sheave or comes into contact with an interface between the sheave surface of the inner sheave and a sheave surface of the outer sheave and with the sheave surface of the fixed sheave with the sheave surface of the inner sheave and the sheave surface of the outer sheave aligned to form one sheave surface, and the second moving mode is performed when the belt comes into contact with the sheave surface of the outer sheave and the sheave surface of the fixed sheave.

The spring pressed variable pitch pulley for a belt-pulley type continuously variable transmission may further include a first elastic member supported on the rotary shaft and pressing the moving sheave toward the fixed sheave to be able to constantly apply tension to the belt wound in the belt groove formed between the moving sheave and the fixed sheave.

In this configuration, the moving sheave-positioning unit may include: a first rotary member coaxially and rotatably installed around the rotary shaft, disposed between the outer sheave and the first elastic member, transmitting elasticity of the first elastic member to the outer sheave, and moved in the axial direction of the rotary shaft together with the outer sheave by the shift control device; a first cam mechanism provided between the first rotary member and the rotary shaft such that the first rotary member is rotated around an axis of the rotary shaft when the first rotary member is moved in the axial direction of the rotary shaft by the shift control device; and a second cam mechanism provided between the first rotary member and the inner sheave to perform, in accordance with rotation of the first rotary member by the first cam mechanism, the first moving mode, in which the first rotary member is coupled to the inner sheave, and the inner sheave and the outer sheave are simultaneously moved together with the first rotary member in the axial direction of the rotary shaft, and the second moving mode in which the first rotary member is decoupled from the inner sheave and only the outer sheave is moved together with the first rotary member in the axial direction of the rotary shaft with respect to the inner sheave.

The first rotary member may be a first cylindrical cam.

The first cam mechanism includes a first cam hole formed at a predetermined angle with respect to an axial direction on an outer circumferential surface of the first cylindrical cam in the axial direction of the first cylindrical cam, and a first pin having a first end fixed to the rotary shaft and a second end coupled to the first cam hole, and rotating the first cylindrical cam when the first cylindrical cam is moved in the axial direction of the rotary shaft.

The first cam hole may be inclined in a direction in which the first cylindrical cam is pressed toward the fixed sheave when the first pin is supported on a wall of the first cylindrical cam, which forms the first cam hole, by rotation of the rotary shaft.

Further, the spring pressed variable pitch pulley for a belt-pulley type continuously variable transmission may further include a second elastic member disposed between the inner sheave and the outer sheave in the axial direction of the rotary shaft such that a first end thereof is supported on the inner sheave to press the outer sheave away from the fixed sheave and a second end thereof is supported on the outer sheave to press the inner sheave toward the fixed sheave.

It is preferable that elasticity of the first elastic member is greater than elasticity of the second elastic member.

The second cam mechanism may include: a second hole having a relief hole formed on the circumferential surface of the first cylindrical cam in the axial direction of the first cylindrical cam, and a supporting hole formed on the circumferential surface of the first cylindrical cam in a circumferential direction of the first cylindrical cam and continuously connected to a front end of the relief hole adjacent to the fixed sheave; and a second pin having a first end fixed to the inner sheave and a second end coupled to the relief hole or the supporting hole in accordance with rotation of the first cylindrical cam.

The second pin may be fixed to a first sleeve axially extending from a rear surface of the inner sheave and movably supported on the rotary shaft.

The first cylindrical cam may be installed to be able to rotate with respect to the outer sheave.

Further, the spring pressed variable pitch pulley for a belt-pulley type continuously variable transmission may further include: a locking hole formed on the outer circumferential surface in the circumferential direction of the first cylindrical cam; and a locking pin having a first end fixed to the outer sheave and a second end coupled to the locking hole.

The locking pin is fixed to a second sleeve axially extending from a rear surface of the outer sheave and movably supported on an outer circumferential surface of the first sleeve.

In this configuration, the first moving mode in which the first cylindrical cam presses the inner sheave toward the fixed sheave through the second pin is performed, when the second pin is positioned in the supporting hole of the first cylindrical cam in accordance with rotation of the first cylindrical cam, and the second moving mode in which the first cylindrical cam presses the outer sheave toward the fixed sheave through the locking pin is performed when the second pin is positioned in the relief hole of the first cylindrical cam in accordance with rotation of the first cylindrical cam, and the first cylindrical cam and the inner sheave are decoupled.

A friction reduction member for reducing friction due to rotation of the first cylindrical cam may be installed between the first cylindrical cam and the first elastic member.

A first oblong hole may be formed in the first sleeve in an axial direction of the first sleeve to be able to prevent the first sleeve from being interfered with by the first pin fixed to the rotary shaft when the inner sheave is moved in the axial direction of the rotary shaft.

Further, a 2-1 oblong hole may be formed in the second sleeve in an axial direction of the second sleeve to be able to prevent the second sleeve from being interfered with by the first pin fixed to the rotary shaft when the outer sheave is moved in the axial direction of the rotary shaft, and a 2-2 oblong hole may be formed in the second sleeve in the axial direction of the second sleeve to be able to prevent the second sleeve from being interfered with by the second pin fixed to the inner sheave when the outer sheave is moved in the axial direction of the rotary shaft.

Meanwhile, in relation to the first embodiment of the present disclosure, when the shift control device is driven in an adjustable shaft center-to-center distance shift type, the rotary shaft is a driving shaft or is coupled to a driving shaft, an invariable pitch pulley is coupled to a driven shaft, and a belt is wound on the spring pressed variable pitch pulley for a belt-pulley type continuously variable transmission and the invariable pitch pulley, whereby it is possible to configure a belt-pulley type continuously variable transmission.

Further, the first embodiment of the present disclosure may include: a rotary shaft; a fixed sheave fixed the rotary shaft; and a moving sheave forming a belt groove, in which a belt is wound, between the moving sheave and the fixed sheave, and installed on the rotary shaft to be able to move in an axial direction of the rotary shaft with respect to the fixed sheave, wherein the moving sheave includes an inner sheave installed to be able to move in the axial direction of the rotary shaft and an outer sheave disposed outside the inner sheave and being able to move in the axial direction with respect to the inner sheave, the spring pressed variable pitch pulley may include: a first elastic member pressing the moving sheave toward the fixed sheave and axially deformed in response to tension variation of the belt by a shift control device; and a moving sheave-positioning unit transmitting elasticity of the first elastic member to both the inner sheave and the outer sheave or only to the outer sheave.

In this configuration, the moving sheave-positioning unit may include: a first cam mechanism converting the elasticity of the first elastic member that is applied in the axial direction of the first rotary shaft or an impellent force that is applied in the axial direction of the rotary shaft from the shift control device into a rotation motion around the axis of the rotary shaft and a straight motion in the axial direction of the rotary shaft; and a second cam mechanism transmitting a force to both the inner sheave and the outer sheave or only to the outer sheave in accordance with the first cam mechanism.

The first cam mechanism may include: a first cylindrical cam having a first cam hole provided at an angle in the axial direction of the rotary shaft; and a first pin having a first end fixed to the rotary shaft and a second end positioned in the first cam hole, the second cam mechanism may include a second cam hole provided at the first cylindrical cam, and a second pin having a first end fixed to the inner sheave and a second end positioned in the second cam hole, and the second cam hole may include a relief hole axially provided and a supporting hole connected to the relief hole and circumferentially provided.

Further, the second cam hole may be a relief hole axially provided and a supporting hole connected to the relief hole and circumferentially provided.

The spring pressed variable pitch pulley for a belt-pulley type continuously variable transmission may have a locking hole provided at the first cylindrical cam and a locking pin having a first end fixed to the outer sheave and a second end positioned in the locking hole, and the locking hole may be circumferentially provided.

Further, a second elastic member may be provided between the inner sheave and the outer sheave.

Further, the first embodiment of the present disclosure may include: a rotary shaft; a fixed sheave installed to be fixed to the rotary shaft; a moving sheave disposed to form a belt groove, in which a belt is wound, between the moving sheave and the fixed sheave, and including an inner sheave installed to be able to move in an axial direction of the rotary shaft and an outer sheave installed on the inner sheave and installed to be able to move in the axial direction of the rotary shaft with respect to the inner sheave; a first elastic member pressing the moving sheave toward the fixed sheave; a rotary body installed between the moving sheave and the first elastic member to be able to be moved and rotated along the axis of the rotary shaft in response to tension variation of the belt by a shift control device of an adjustable shaft center-to-center distance shift type or fixed shaft center-to-center distance shift type; a first cam mechanism provided at the rotary body and the rotary shaft to be able to rotate the rotary body around the rotary shaft in accordance with axial movement of the rotary body; and a second cam mechanism provided at the rotary body and the inner sheave to be able to be coupled to both the outer sheave and the inner sheave or only to the outer sheave in accordance with rotation of the first cam.

Claims 19 to 43 and claims 56 to 66 that correspond to a second embodiment of the present disclosure are particularly associated with a variable pitch pulley for a belt-pulley type continuously variable transmission that is driven by a rotation control type of an adjustable shaft center-to-center distance shift type.

The variable pitch pulley for a belt-pulley type continuously variable transmission may include: a rotary shaft; a fixed sheave installed to be fixed to the rotary shaft;
a moving sheave installed on the rotary shaft to face the fixed sheave such that a belt groove in which a belt is wound is formed between the moving sheave and the fixed sheave, the moving sheave including an inner sheave installed on an outer surface of the rotary shaft to be able to axially move, and an outer sheave installed to be radially stacked on the inner sheave and to be able to move in an axial direction of the rotary shaft with respect to the inner sheave; and a shift control device determining, by rotation control, relative positions of the inner sheave and the outer sheave such that the inner sheave and the outer sheave are simultaneously moved in accordance with rotation in a third moving mode, and the inner sheave runs idle while maintaining its position and only the outer sheave is moved in accordance with rotation in a fourth moving mode in order to be able to perform any one of the third moving mode in which the inner sheave and the outer sheave are simultaneously moved in the axial direction of the rotary shaft and the fourth moving mode in which only the outer sheave is moved in the axial direction of the rotary shaft with respect to the inner sheave.

In this configuration, the third moving mode may be performed when the belt comes into contact with a sheave surface of the inner sheave and a sheave surface of the fixed sheave in the belt groove or comes into contact with an interface between the sheave surface of the inner sheave and a sheave surface of the outer sheave and with the sheave surface of the fixed sheave with the sheave surface of the inner sheave and the sheave surface of the outer sheave aligned to form one sheave surface, and the fourth moving mode may be performed when the belt comes into contact with the sheave surface of the outer sheave and the sheave surface of the fixed sheave in the belt groove.

In this configuration, the shift control device includes: a second rotary member including a rotation control device that generates a rotation force, and installed on the rotary shaft to be able to be rotated and coaxially run idle with respect to rotation of the rotary shaft by the rotation control device; a first driven member having a first end cam-coupled to the second rotary shaft and a second end installed on the inner sheave to be able to run idle with respect to rotation of the inner sheave; and a second driven member having a first end cam-coupled to the second rotary shaft and a second end installed on the outer sheave to be able to run idle with respect to rotation of the outer sheave, and any one of the third moving mode and the fourth moving mode is performed in accordance with rotation of the second rotary member.

The second rotary member may be a second cylindrical cam.

Further, a third cam hole to which the first driven member is cam-coupled and a fourth cam hole to which the second driven member is cam-coupled are formed on a circumferential surface of the second cylindrical cam.

Further, the third cam hole includes: a 3-1 cam hole formed at an angle on the circumferential surface of the second cylindrical cam in an axial direction of the second cylindrical cam; and a 3-2 cam hole continuously connected to a front end of the 3-1 cam hole, which is adjacent to the fixed sheave, and formed on the circumferential surface of the second cylindrical cam in a circumferential direction of the second cylindrical cam, and the fourth cam hole may be formed at an angle on the circumferential surface of the second cylindrical cam in the axial direction of the second cylindrical cam.

The 3-2 cam hole is formed to restrict movement of the inner sheave in the axial direction of the rotary shaft when the second cylindrical cam is rotated.

The 3-1 cam hole and the fourth cam hole may have the same inclination.

Further, the variable pitch pulley for a belt-pulley type continuously variable transmission may further include a third elastic member disposed between the inner sheave and the outer sheave in the direction of the rotary shaft such that a first end thereof is supported on the inner sheave to press the outer sheave away from the fixed sheave and a second end thereof is supported on the outer sheave to press the inner sheave toward the fixed sheave.

The first driven member may be fixed to a second bearing coaxially installed on the inner sheave to be able to run idle with respect to rotation of the inner sheave, and the second driven member is fixed to a third bearing installed on the outer sheave to be able to run idle with respect to rotation of the outer sheave.

The second bearing may be installed at a third sleeve axially extending from the rear surface of the inner sheave and movably supported on the rotary shaft, and the third bearing may be fixed to a fourth sleeve axially extending from the rear surface of the outer sheave and movably supported on the third sleeve.

The first driven member may be a first driven pin coupled to the third cam hole of the second cylindrical cam and the second driven member may be a second driven pin coupled to the fourth cam hole of the second cylindrical cam.

The first driven member may include: a first driven pin coupled to the third cam hole of the second cylindrical cam; and a first movement transferring member having a first end fixed to the first driven pin and a second end fixed to the second bearing, and the second driven member may include: a second driven pin coupled to the fourth cam hole of the second cylindrical cam; and a second movement transferring member having a first end fixed to the second driven pin and a second end fixed to the third bearing.

The first movement transferring member and the second movement transferring member each may be formed in a cylindrical shape, and may be coaxially disposed on the rotary shaft.

A third oblong hole may be formed at the first movement transferring member in an axial direction of the first movement transferring member to be able to prevent the second movement transferring member from being interfered with by the second driven pin when the second movement transferring member is moved in the axial direction of the rotary shaft.

A fourth oblong hole may be formed at the second movement transferring member in an axial direction of the second movement transferring member to be able to prevent the second movement transferring member from being interfered with by the first driven pin when the second movement transferring member is moved in the axial direction of the rotary shaft.

In order for the first driven pin and the second driven pin to be prevented from circumferentially moving with respect to the rotary shaft and to straightly move in the axial direction of the rotary shaft, it is preferable that the first driven pin and the second driven pin are guided by a guide member that is installed at a casing of the variable pitch pulley for a belt-pulley type continuously variable transmission, is installed on a base (not shown) on which the variable pitch pulley for a belt-pulley type continuously variable transmission is installed, is installed on the floor of a place where the variable pitch pulley for a belt-pulley type continuously variable transmission is installed, or is installed at a metal fitting fixed to a base on which the variable pitch pulley for a belt-pulley type continuously variable transmission is installed or fixed to the floor of a place where the variable pitch pulley for a belt-pulley type continuously variable transmission is installed.

The guide member is arranged in the axial direction of the rotary shaft, the guide member in which a first guide hole in which the first driven pin is inserted and a second guide hole in which the second driven pin is inserted are formed.

The first guide hole and the second guide hole may be formed into one hole.

The third moving mode, in which the second cylindrical cam simultaneously moves the inner sheave and the outer sheave toward the fixed sheave through the first driven pin and the second driven pin, is performed, when, in accordance with rotation of the second cylindrical cam, the first driven pin is coupled to the 3-1 cam hole of the second cylindrical cam and the second driven pin is coupled to the fourth cam hole of the second cylindrical cam, and the fourth moving mode, in which the inner sheave to which the first driven pin is fixed is restricted in movement in the axial direction of the rotary shaft by the 3-2 cam hole formed circumferentially but the second cylindrical cam moves the outer sheave toward the fixed sheave through the second driven pin, is performed, when the 3-2 cam hole of the second cylindrical cam is coupled to the first driven pin after the second cylindrical cam keeps rotating and the 3-1 cam hole of the second cylindrical cam is separated from the first driven pin with the second driven pin coupled to the fourth cam hole of the second cylindrical cam.

The second cylindrical cam is fixed to a fourth bearing coaxially installed on the rotary shaft to run idle with respect to rotation of the rotary shaft.

The rotation control device may be a motor or a rotary handle that is manually operated.

The rotation control device and the second cylindrical cam are worm gear-coupled.

The worm gear-coupling is implemented by: a worm installed on a shaft of the rotation control device; and a worm wheel coupled to the worm, installed on the second cylindrical cam, and transmitting a rotation force of the rotation control device of the worm to the second cylindrical cam.

The rotary shaft may be a driving shaft or is coupled to a driving shaft.

Meanwhile, in relation to the second embodiment of the present disclosure, when the rotary shaft is a driving shaft or is coupled to a driving shaft, the rotary shaft of the spring pressed variable pitch pulley for a belt-pulley type continuously variable transmission according to the first embodiment of the present disclosure is a driven shaft or is coupled to a driven shaft, whereby a belt-pulley type continuously variable transmission may be configured.

A variable pitch pulley for a belt-pulley type continuously variable transmission including a shift control device of a rotation control type related to the second embodiment of the present disclosure includes: a rotary shaft; a fixed sheave fixed the rotary shaft; and a moving sheave forming a belt groove, in which a belt is wound, between the moving sheave and the fixed sheave, and installed on the rotary shaft to be able to move in an axial direction of the rotary shaft with respect to the fixed sheave, wherein the moving sheave includes an inner sheave installed to be able to move in the axial direction of the rotary shaft and an outer sheave disposed outside the inner sheave and being able to move in the axial direction with respect to the inner sheave, and a rotation force is generated, the generated rotation force is converted into a straight motion parallel with the rotary shaft, and the straight motion is transmitted to both the inner sheave and the outer sheave or only to the outer sheave.

In this configuration, the shift control device of the rotation control type may include: a second cylindrical cam having a rotation control device that generates a rotation force, provided on the rotary shaft to be able to run idle with the rotary shaft, and having a third cam groove and a fourth cam groove ; a first driven pin having a first side connected to the inner sheave to be able to run idle with the inner sheave and a second side positioned in the third cam groove; and a second driven pin having a first side connected to the outer sheave to be able to run idle with the outer sheave and a second side positioned in the fourth cam groove.

Further, the third cam hole may include a 3-1 cam hole provided at an angle in an axial direction of the second cylindrical cam and a 3-2 cam hole connected to the 3-1 cam hole adjacent to the fixed sheave and provided in a circumferential direction of the second cylindrical cam, and the fourth cam hole may be provided at an angle in the axial direction of the second cylindrical cam.

The 3-1 cam hole and the fourth cam hole may have the same inclination.

Further, a second bearing may be provided at the inner sheave so that the first driven pin run idles with respect to the inner sheave, and a third bearing may be provided at the outer sheave so that the second driven pin run idles with respect to the outer sheave.

Further, a third sleeve axially extending from a rear surface of the inner sheave may be provided at the inner sheave and the second bearing may be provided at the third sleeve; and a fourth sleeve axially extending from a rear surface of the outer sheave may be provided at the outer sheave and the third bearing may be provided at the fourth sleeve.

In this configuration, a guide member may be provided outside the third cylindrical cam to prevent the first driven pin and the second driven pin from moving in a circumferential direction with respect to the rotary shaft.

The guide member may is arranged in the axial direction of the rotary shaft and include a first guide hole in which the first driven pin is inserted and a second guide hole in which the second driven pin are inserted, respectively.

Further, the rotation control device may be a motor or a rotary handle that is manually operated.

It is preferable that the rotation control device and the second cylindrical cam are worm gear-coupled.

Claims 44 to 49 and claims 66 and 67 relating to a third embodiment of the present disclosure are associated with a variable pitch pulley structure for a belt-pulley type continuously variable transmission.

The variable pitch pulley for a belt-pulley type continuously variable transmission includes: a rotary shaft; a fixed sheave installed on the rotary shaft; and a moving sheave disposed to form a belt groove, in which a belt is wound, between the moving sheave and the fixed sheave, and installed on the rotary shaft to be able to be moved in an axial direction of the rotary shaft by a shift control device of an adjustable shaft center-to-center distance shift type or fixed shaft center-to-center distance shift type, wherein the moving sheave includes: an inner sheave installed to be able to move in the axial direction of the rotary shaft; and an outer sheave supported on an outer circumferential surface of the inner sheave and installed to be able to move in the axial direction of the rotary shaft with respect to the inner sheave, and an interface between a sheave surface of the inner sheave and a sheave surface of the outer sheave has a plurality of teeth that are engaged with each other in circumferential directions of the inner sheave and the outer sheave when the sheave surface of the outer sheave and the sheave surface of the inner sheave are aligned to form one sheave surface by the shift control device.

In this configuration, an interface between a sheave surface of the inner sheave and a sheave surface of the outer sheave may have a plurality of teeth that are engaged with each other in circumferential directions of the inner sheave and the outer sheave when the sheave surface of the outer sheave and the sheave surface of the inner sheave are aligned to form one common sheave surface by the shift control device.

The teeth may be continuously connected curves.

An edge of the sheave surface of the inner sheave and an edge of the sheave surface of the outer sheave that form the interface may be machined into curved surfaces.

It is preferable that a radial variation width of the interface formed by engagement of teeth of the inner sheave and teeth of the outer sheave is smaller than a height of the belt.

Teeth formed at the inner sheave and teeth formed at the outer sheave may make pairs, and may have the number of teeth of at least three pairs.

A groove having the same shape as the interface is formed on a sheave surface of the fixed sheave that corresponds to the interface of the outer sheave.

The structure of the variable pitch pulley according to the third embodiment of the present disclosure may include: a rotary shaft; a fixed sheave fixed the rotary shaft; and a moving sheave including an inner sheave provided to be able to move in an axial direction of the rotary shaft and an outer sheave provided to be able to move in the axial direction with respect to the inner sheave, wherein a convex portion or a concave portion may be provided on an outer circumferential surface of the inner sheave, and a convex portion or a concave portion that corresponds to the convex portion or the concave portion may be provided on an inner circumferential surface of the outer sheave.

In this configuration, the convex portion or the concave portion may be a combination of curves.

The features of the embodiments described above may be combined in other embodiments unless they are contradictory to other embodiments or are exclusive.

### [Advantageous Effects]

A spring pressed variable pitch pulley for a belt-pulley type continuously variable transmission according to a first embodiment of the present disclosure and a belt-pulley type continuously variable transmission to which the pulley is applied can obtain a wide gear ratio range and can apply appropriate tension to a belt by constantly pressing a moving sheave composed of an inner sheave and an outer sheave to a fixed sheave using only a spring through a first cylindrical cam having simple configuration.

A variable pitch pulley for a belt-pulley type continuously variable transmission according to a second embodiment of the present disclosure and a belt-pulley type continuously variable transmission to which the pulley is applied can obtain a wide gear ratio range and can precisely control a moving sheave composed of an inner sheave and an outer sheave using a rotation control type having simple configuration rather than a hydraulic control type having complicated configuration.

A variable pitch pulley structure for a belt-pulley type continuously variable transmission according to a third embodiment of the present disclosure obtains a wide gear ratio range and particularly has a simple structure in which an inner sheave fills the inside of an outer sheave, so it is possible to enable a belt to smoothly run when the belt moves from the inner sheave to the outer sheave or from the outer sheave to the inner sheave, as compared with an interlacing sheave type of variable pitch pulley according to the related art. Accordingly, there is an effect that not only can shifting be smoothly performed, but also driving noise can be reduced, and particularly, it is possible to reduce damage and wear of the belt at an interface.

### [Description of Drawings]

FIG. 1 is a schematic view of a variable pitch pulley for a belt-pulley type continuously variable transmission according to the related art.
FIG. 2a is an exemplary view showing that a belt-pulley type continuously variable transmission according to the related art in which a single variable pitch pulley is installed and that is driven by a shift control device of an "adjustable shaft center-to-center distance shift type" is in a low-speed gear ratio state.
FIG. 2b is an exemplary view showing that the belt-pulley type continuously variable transmission of FIG. 2a is in a high-speed gear ratio state.
FIG. 3a is an exemplary view showing that a belt-pulley type continuously variable transmission according to the related art in which a double variable pitch pulley is installed and that is driven by a shift control device of a "fixed shaft center-to-center distance shift type" is in a low-speed gear ratio state.
FIG. 3b is an exemplary view showing that the belt-pulley type continuously variable transmission of FIG. 3a is in a high-speed gear ratio state.
FIG. 4a is an exemplary view of a shift control device of a "fixed shaft center-to-center distance shift type" according to the related art that is driven by hydraulic control.
FIG. 4b is an exemplary view of a shift control device of a "fixed shaft center-to-center distance shift type" according to the related art that is driven by rotation control.
FIG. 4c is an exemplary view of a shift control device of a "fixed shaft center-to-center distance shift type" according to the related art that is driven by centrifugal control.
FIG. 5 is a view showing an interlacing sheave or interdigitating sheave type of variable pitch pulley according to the related art.
FIGS. 6a to 6f are views showing a conical half according to the related art that includes an inner section and an outer section to increase a gear ratio range.
FIGS. 7a to 7b are views showing an embodiment according to the related art for controlling a conical half including an inner section and an outer section in a hydraulic control type.
FIGS. 8a to 8b are views showing an embodiment according to the related art for controlling a conical half including an inner section and an outer section in a hydraulic-mechanical control type and a hydraulic-electromagnetic control type.
FIGS. 9a to 9c are exemplary views showing an operation state of a spring pressed variable pitch pulley for a belt-pulley type continuously variable transmission according to a first embodiment of the present disclosure.
FIG. 10 is an exemplary view showing an embodiment of a first cylindrical cam that is applied to FIGS. 9a to 9c.
FIG. 11 is an exemplary view showing a modified embodiment of the spring pressed variable pitch pulley for a belt-pulley type continuously variable transmission according to the first embodiment of the present disclosure.
FIG. 12 is an exemplary view showing a modified embodiment of the first cylindrical cam that is applied to FIG. 11.
FIG. 13a is a view exemplifying a first locking mechanism of a variable pitch pulley that can be applied to a first embodiment to a third embodiment of the present disclosure.
FIG. 13b is a view exemplifying a stopper structure that can be applied to the first embodiment to the third embodiment of the present disclosure.
FIGS. 14a to 14c are exemplary views showing an operation state of a variable pitch pulley for a belt-pulley type continuously variable transmission according to a second embodiment of the present disclosure.
FIG. 15 is an exemplary view showing an embodiment of a second cylindrical cam that is applied to FIG. 14a.
FIGS. 16a to 16c are exemplary views showing an operation state of a modified embodiment of the variable pitch pulley for a belt-pulley type continuously variable transmission according to the second embodiment of the present disclosure.
FIG. 17a is an exemplary view of a variable pitch pulley for a belt-pulley type continuously variable transmission in which a variable pitch pulley structure for a belt-pulley type continuously variable transmission according to the third embodiment of the present disclosure can be installed.
FIG. 17b is a front view of a moving sheave installed in the variable pitch pulley structure for a belt-pulley type continuously variable transmission according to the third embodiment of the present disclosure seen in the direction A-A along a line I-I.

### [Best Mode for Disclosure]

Hereinafter, embodiments of the present disclosure will be described with reference to the accompanying drawings.

The embodiments to be described below are provided to help understand the present disclosure and the present disclosure is not limited to the embodiments to be described below. Further, specific components may be exaggerated or reduced in the accompanying drawings to help understand the present disclosure and are not limited to the shapes shown in the drawings of the present disclosure.

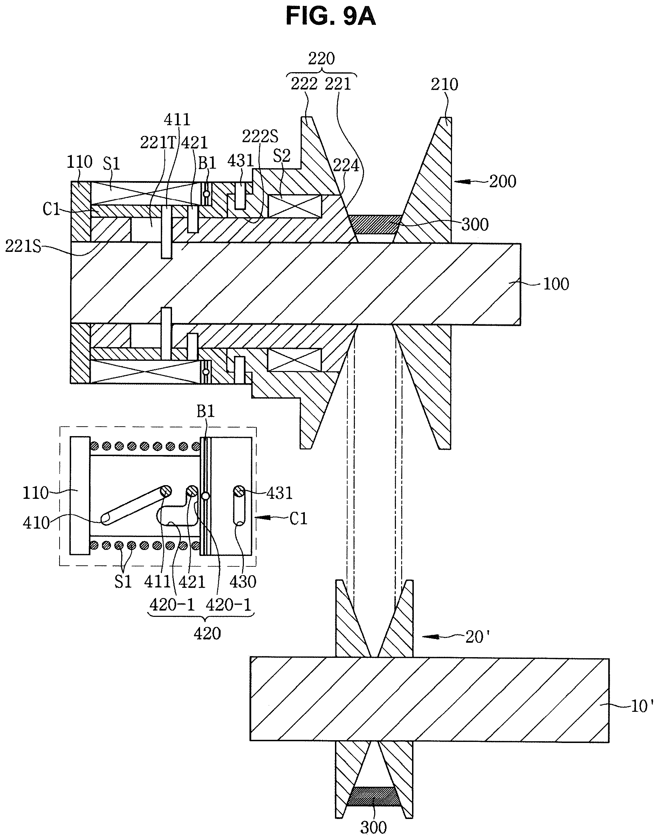

First, a principle according to a first embodiment of the present disclosure is described with reference to FIGS. 9a to 9c to help more easily understand the first embodiment of the present disclosure.

A variable pitch pulley 200 may include a rotary shaft 10, a sheave 210 fixed to the rotary shaft 10, and a moving sheave 220 being able to move in the axial direction of the rotary shaft 10. When the variable pitch pulley 200 is used as a component of a continuously variable transmission, a belt 300 may be used between the fixed sheave 210 and the moving sheave 220.

A first elastic member S1 of which the elasticity changes in accordance with tension of the belt 300 may be disposed at a predetermined position on the rotary shaft 10.

The moving sheave 220 may include an inner sheave 221 that can move in the axial direction of the rotary shaft 100 and an outer sheave 222 that can move on the outer surface of the inner sheave 221 with respect to the inner sheave 221 in the axial direction.

Meanwhile, in the present disclosure, a moving sheave-positioning unit may be disposed between the first elastic member S1 and the moving sheave 220. The moving sheave-positioning unit can transmit the axial elasticity of the first elastic member S1 or an impellent force by tension variation from a shift control device not shown selectively to the inner sheave 221 and the outer sheave 222.

For example, by the moving sheave-positioning unit, the axial elasticity of the first elastic member S1 or the impellent force from the shift control device not shown may be transmitted to both the inner sheave 221 and the outer sheave 222 (hereafter, a 'first moving mode' for convenience) or may be transmitted to only the outer sheave 222 (hereafter, a 'second moving mode' for convenience).

In an axial first moving mode, the inner sheave 221 and the outer sheave 222 can be axially moved together (hereafter, a 'first moving mode' for convenience).

In an axial second moving mode, only the outer sheave 222 can be axially moved (hereafter, a 'second moving mode' for convenience).

An example of the moving sheave-positioning unit is described.

The moving sheave-positioning unit may include a first cam mechanism and a second cam mechanism.

The first cam mechanism serves to convert the elasticity of the first elastic member S1 that is applied in the axial direction of the first rotary shaft 10 or the impellent force that is applied in the axial direction of the rotary shaft 10 from the shift control device not shown into a rotation motion around the axis of the rotary shaft 10 and a straight motion in the axial direction of the rotary shaft 10. The second cam mechanism serves to transmit a force axially to both the inner sheave 221 and the outer sheave 222 or only to the outer sheave 222 in accordance with rotation of the first cam mechanism.

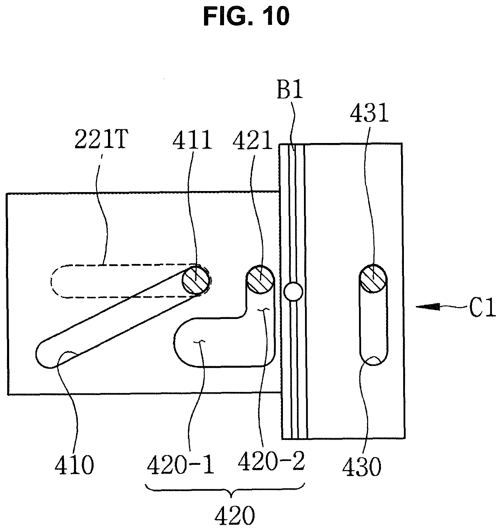

Examples of the first cam mechanism and the second cam mechanism are briefly described with reference to FIGS. 9a and 10.

The first cam mechanism may include a first rotary member C1 and a first pin 411.

The first rotary member C1, for example, may be a first cylindrical cam C1. The first cylindrical cam C1 may have a first cam hole 410 formed at an angle in the axial direction. A first end of the first pin 411 may be fixed to the rotary shaft 100 and a second end thereof may be positioned in the first cam hole 410.

At the cylindrical cam C1, the elasticity of the first elastic member S1 is axially applied to the fixed sheave 210, and the impellent force that is applied from the shift control device not shown is axially transmitted to the first elastic member S1 through the moving sheave. Hereafter, for the convenience of description, operation of the cylindrical cam C1 by only the elasticity of the first elastic member S1 is described under the assumption that there is no impellent force.

First, when the elasticity of the first elastic member is axially transmitted to the first cylindrical cam C1, the first cylindrical cam C1 is straightly moved and rotated by interaction of the first cam 410 and the first pin 411 because the first cam hole 410 is inclined from the axial direction.

The second cam mechanism may include a second cam hole 420 provided at the first cylindrical cam C1 and a second pin 421 connected to the second cam hole 420.

The second cam hole 420 may include a relief hole 420-1 formed in the axial direction and a supporting hole 420-2 connected to the relief hole 420-1 and circumferentially provided. A first end of the second pin 421 may be fixed to the inner sheave 221 and a second end thereof may be positioned in the second cam hole 420.

Further, a locking hole 430 may be provided at the first cylindrical cam C1, and in more detail, may be circumferentially provided.

The locking pin 431 may be positioned in the locking hole 430, and a first end of the locking pin 431 may be fixed to the outer sheave 222 and a second end thereof may be positioned in the locking hole 430.

Meanwhile, as described above, the first end of the second pin 421 and the first end of the locking pin 431 may be fixed to the inner sheave 221 and the outer sheave 222, respectively.

The positions of the first cam hole 410, the second cam groove 420, and the locking hole 430 are not limited to the positions or the numbers shown in FIG. 10, and the positions or the numbers of the first pin 411, the second pin 421, and the locking pin 431 corresponding to the holes are also not limited to the positions and the numbers shown in FIG. 10 and may be freely changed in accordance with design conditions.

The inner sheave 221 and the outer sheave 222 may include a first sleeve 221S and a second sleeve 222S that extend rearward from sheave surfaces thereof, respectively. Further, the first end of the second pin 421 and the first end of the locking pin 431 may be fixed to the first sleeves 221S and the second sleeve 222S, respectively.

Further, when the length of the first sleeves 221S and the length of the second sleeve 222S are large in the axial direction, oblong holes 221T, 221T'-1, and 221T1-2 through which the second pin 421 and/or the locking pin 431 are disposed may be provided at the first sleeve 221S (see FIGS. 9a and 11).

For example, when the first sleeves 221S extends into the first cylindrical cam C1, an oblong hole through which the first pin 421 is disposed may be provided at the first sleeves 221S (see FIG. 9a). Further, when the second sleeve 222S also extends into the first cylindrical cam C1, an oblong hole through which the locking pin 431 is disposed may be provided at the first sleeve 221S (see FIG. 11).

The oblong holes 221T, 221T'-1, and 221T1-2 may be provided to have sizes corresponding to positions corresponding to a first locking groove 410 and a second locking groove 220.

Meanwhile, a second elastic member S2 may be provided between the inner sheave 221 and the outer sheave 222. The second elastic member S2 can assist the function of keeping the sheave surface of the inner sheave 221 and the sheave surface of the outer sheave 222 aligned in the first moving mode. The elasticity of the first elastic member S1 may be greater than that of the second elastic member S2 so that the outer sheave 222 can move toward the fixed sheave 210 from the inner sheave 221 against the elasticity of the second elastic member S2 in the second moving mode.

Operation of the present disclosure, when the variable pitch pulley according to the first embodiment of the present disclosure is used for a belt-pulley type continuously variable transmission that is driven by a shift control device of an "adjustable shaft center-to-center distance type" not shown, is roughly described with reference to FIGS. 9a to 9c.

FIG. 9a shows that the pitch diameter of the variable pitch pulley 200 is at a minimum and a low-speed gear ratio has been implemented. In this state, the sheave surface of the inner sheave 221 and the sheave surface of the outer sheave 222 have been aligned to form one sheave surface.

If the driving shaft 10 approaches the driven shaft 10', the shaft center-to-center distance between the rotary shaft 100, which is the driving shaft, and the driven shaft 10' decreases. Accordingly, tension of the belt 300 is about to decrease, but the first elastic member S1 responds to tension variation of the belt 300. That is, the first cylindrical cam C1 is pushed toward the fixed sheave 210 by the elasticity of the first elastic member S1.

Meanwhile, in this state, the positions of the first pin 411, the second pin 421, and the locking pin 431 are as shown in FIG. 10.

The first cylindrical cam C1 is rotated by the first pin 411. However, the second pin 421 is positioned in the region of the supporting hole 420-2 and the locking pin 431 is positioned in the locking hole 430. Accordingly, the inner sheave 221 and the outer sheave 222 are moved together toward the fixed sheave 210 by the second pin 421 and the locking pin 431. Accordingly, the belt 400 is moved up outward in the radial direction of the inner sheave 221.

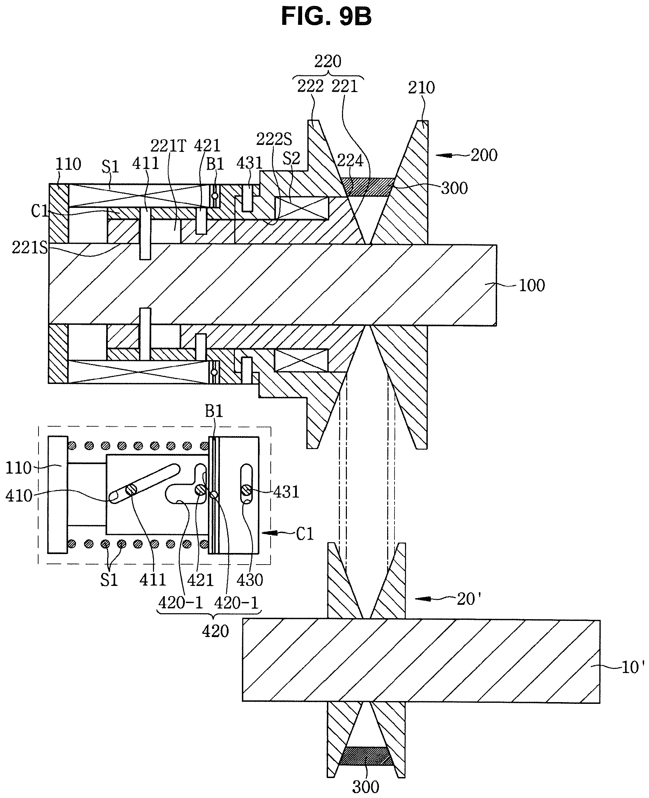

FIG. 9b shows that the first moving mode has been finished. When the first moving mode is finished, the lower end of the inner sheave 221 is almost in contact with the lower end of the moving sheave 220, and the belt 330 is positioned at the lower portion of the outer sheave 222, but is not in contact with an interface 224.

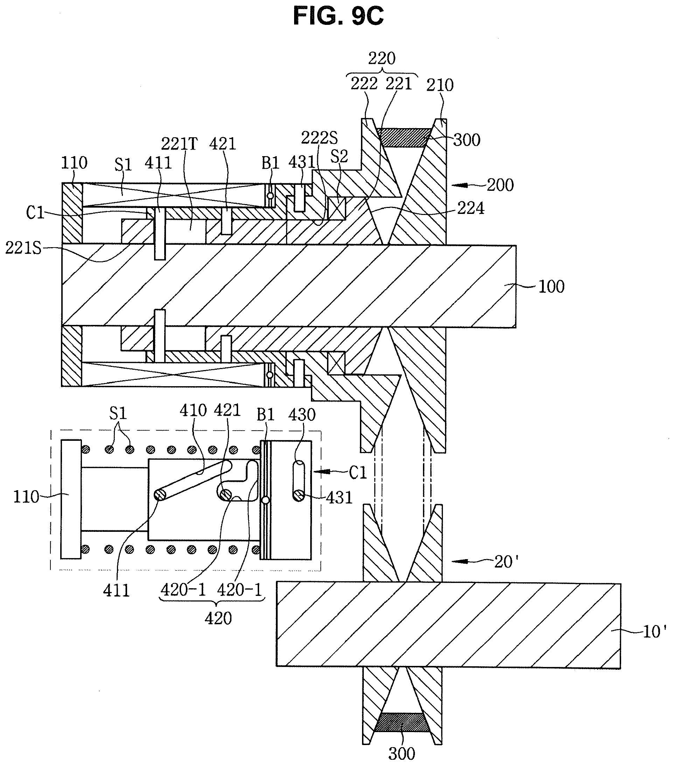

As shown in FIG. 9c, when the driving shaft 10 further approaches the driven shaft 10' in the state shown in FIG. 9b, the shaft center-to-center distance of the rotary shaft 100, which is the driving shaft, and the driven shaft 10' further decreases.

Accordingly, tension of the belt 300 about to further decrease and the first elastic member S1 responds to tension variation of the belt 300. That is, the first cylindrical cam C1 is further pushed toward the fixed sheave 210 by the elasticity of the first elastic member S1.

However, when the first moving mode has been finished, the second pin 421 is positioned in the region of the relief hole 420-1 after coming out of the supporting hole 420-2. Accordingly, since the second pin 421 is positioned in the relief hole 420-1 provided axial direction, it no longer pushes the inner sheave 221. However, since the locking pin 431 stays in the locking groove 430 circumferentially provided, the elasticity of the elastic member 411 that is applied through the cylindrical cam C1 is transmitted to the locking pin 431, and accordingly, the locking pin 431 pushes the outer sheave 222 toward the fixed sheave 210. Accordingly, the belt 300 is moved up outward in the radial direction of the outer sheave 222.

In short, the first embodiment of the present disclosure uses only the axial elasticity of the first elastic member S1, the impellent force applied from the shift control device, and the moving sheave-positioning unit, and it is possible to move both the inner sheave 221 and the outer sheave 221 or only the outer sheave 221. Therefore, according to the present disclosure, it is possible to obtain a wide gear ratio through a simple structure.

Hereafter, various embodiments of the present disclosure are described in detail.

### First Embodiment

Hereafter, a first embodiment of the present disclosure is described with reference to FIGS. 9a to 13b.

First, referring to FIGS. 9a to 9c, a spring pressed variable pitch pulley 200 for a belt-pulley type continuously variable transmission according to a first embodiment of the present disclosure includes: a rotary shaft 100; a fixed sheave 210 installed on the rotary shaft 100; a moving sheave 220 disposed to form a belt groove, in which a belt 300 is wound, between the moving sheave 220 and the fixed sheave 210, and installed on the rotary shaft 100 to be able to be moved in the axial direction of the rotary shaft 100 by a shift control device 40 of an "adjustable shaft center-to-center distance shift type" (see FIGS. 2a and 2b) or a shift control device 40' of a "fixed shaft center-to-center distance shift type" (see FIGS. 3a and 3b); and a first elastic member S1 supported on the rotary shaft to be able to constantly apply tension to the belt 300 wound in the belt groove, and pressing the moving sheave 220 toward the fixed sheave 210.

In this configuration, the moving sheave 220 includes an inner sheave 221 installed to be able to move in the axial direction of the rotary shaft 100, and an outer sheave 222 radially stacked on the outer circumferential surface of the inner sheave 221 and installed to be able to move in the axial direction of the rotary shaft 100 with respect to the inner sheave 221.

In addition to the configuration, the first embodiment of the present disclosure includes a moving sheave-positioning unit that performs shifting by changing the position of the belt by performing, in response to tension variation of the belt 300 by a shift control device (not shown), any one of a first moving mode in which the inner sheave 221 and the outer sheave 222 are simultaneously moved in the axial direction of the rotary shaft 100, and a second moving mode in which only the outer sheave 222 is moved in the axial direction of the rotary shaft 100 with respect to the inner sheave 221.

In this embodiment, the moving sheave-positioning unit may include: a first rotary member C1 that is coaxially and rotatably installed around the rotary shaft 100, is disposed between the outer sheave 222 and the first elastic member S1, is supported on the first elastic member S1 to be able to transmit elasticity of the first elastic member S1 to the outer sheave 222, and is moved together with the outer sheave 222 in the axial direction of the rotary shaft 100 by the shift control device (not shown); a first cam mechanism that is provided between the first rotary member C1 and the rotary shaft 100 such that the first rotary member C1 is rotated around the rotary shaft 100 when the first rotary member C1 is moved together with the outer sheave 222 in the axial direction of the rotary shaft 100 by the shift control device (not shown); and a second cam mechanism that is provided between the first rotary member C1 and the inner sheave 221, in accordance with rotation of the first rotary member C1 by the first cam mechanism, to be able to have a first moving mode, in which the first rotary member C1 is coupled to the inner sheave 221, and the inner sheave 221 and the outer sheave 222 are simultaneously moved together with the first rotary member C1 in the axial direction of the rotary shaft 100, and a second moving mode in which the first rotary member C1 is decoupled from the inner sheave 221 and only the outer sheave 222 is moved together with the first rotary member C1 in the axial direction of the rotary shaft 100 with respect to the inner sheave 221.

In this configuration, the first moving mode is performed, with the sheave surface of the inner sheave 221 and the sheave surface of the outer sheave 222 aligned to form one sheave surface, when the belt 300 comes into contact with a sheave surface of the inner sheave 221 and a sheave surface of the fixed sheave 210 in the belt groove or comes into contact with an interface 224 between the sheave surface of the inner sheave 221 and a sheave surface of the outer sheave 222 and the sheave surface of the fixed sheave 210; and the second moving mode is performed when the belt 300 comes in contact with the sheave surface of the outer sheave 222 and the sheave surface of the fixed sheave 210 in the belt groove.

When the shift control device 40 is driven in the "adjustable shaft center-to-center distance shift type", as described above with reference to FIGS. 2a and 2b of the related art, the rotary shaft 100 of the spring pressed variable pitch pulley 200 according to the first embodiment of the present disclosure may be configured as a driving shaft or may be configured in a structure that can be installed on a driving shaft. Alternatively, when a shift control device (not shown) is driven in the "fixed shaft center-to-center distance shift type", as described above with reference to FIGS. 3a and 3b of the related art, the rotary shaft 100 of the spring pressed variable pitch pulley 200 according to the first embodiment of the present disclosure may be configured as a driven shaft or may be configured in a structure that can be installed on a driven shaft.

Meanwhile, the inner sheave 221 can be moved in the axial direction of the rotary shaft 100, like a moving sheave according to the related art, but is configured to be restricted in circumferential movement, that is, rotational movement.

For the movement characteristic of the inner sheave 221 described above, a key, spline, or ball spline structure (not shown) is provided on the outer circumferential surface of the rotary shaft 100 and the inner circumferential surface of the inner sheave 221, and the same structure is apparent, so it is not described below.

Similarly, the outer sheave 222 can be moved in the axial direction of the rotary shaft 100 with respect to the inner sheave 221 in the same way, but is configured to be restricted in circumferential movement, that is, rotational movement.

The first rotary member C1 may be configured as a first cylindrical cam, as shown in FIG. 10.

The first elastic member S1 may be a spring and has a first end supported on a supporting member 110 fixed to the rotary shaft 100 and a second end supported on the first cylindrical cam C1 such that the first cylindrical cam C1 is pressed toward the fixed sheave 210.

Referring to FIG. 10, when the first rotary member C is configured as a first cylindrical cam C1, as described above, the first cam mechanism includes: a first cam hole 410 formed at an angle on the circumferential surface of the first cylindrical cam C1 in the axial direction of the first cylindrical cam C1; and a first pin 411 having a first end fixed to the rotary shaft 100 and a second end coupled to the first cam hole 410, and rotating the first cylindrical cam C1 when the first cylindrical cam C1 is moved in the axial direction of the rotary shaft 100.

The first pin 411 functions as a kind of guide pin that guides rotation of the first cylindrical cam C1 through the first cam hole 410 of the first cylindrical cam C1.

The first cam hole 410 is inclined in a direction in which the first cylindrical cam C1 is pressed toward the fixed sheave 210 when the first pin 411 is supported on the wall, which forms the first cam hole 410, of the first cylindrical cam C1, by rotation of the rotary shaft 100.

By Having the first cam hole 410 inclined as described above, as those skilled in the art can understand, the first cylindrical cam C1 can obtain the characteristics of a so-called "torque cam" when the rotary shaft 100 is rotated.

Meanwhile, referring to FIGS. 9a to 9c, a second elastic member S2 that is a spring is further provided between the inner sheave 221 and the outer sheave 222 in the axial direction of the rotary shaft 100. A first end of the second elastic member S2 is supported on the inner sheave 221 to press the outer sheave 222 away from the fixed sheave 210 and a second end thereof is supported on the outer sheave 222 to press the inner sheave 221 toward the fixed sheave 210.

The second elastic member S2 suppresses movement of the outer sheave 222 toward the fixed sheave 210 with the sheave surface of the inner sheave 221 and the sheave surface of the outer sheave 222 aligned, that is, aligned to form one sheave surface in the first moving mode, thereby serving to maintain the first moving mode state.

The elasticity of the first elastic member S1 can easily compress the second elastic member S2 and it is preferable that the first elastic member S1 has elasticity that can apply tension, which is required to transmit power, to the belt 300.

Further, in the first embodiment of the present disclosure, a first locking mechanism is provided to prevent the outer sheave 222 from moving apart from the fixed sheave 210 with the sheave surface of the inner sheave 221 and the sheave surface of the outer sheave 222 aligned, that is, aligned to form one sheave surface in the first moving mode.

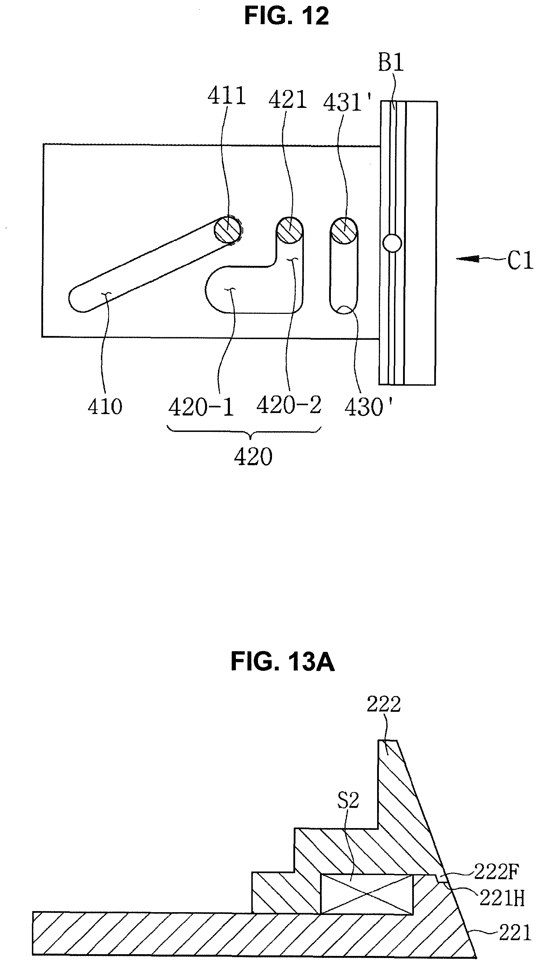

The first locking mechanism can be configured in various ways at the level of those skilled in the art, but as an embodiment, as shown in FIG. 13a, is composed of an inner flange 222F extending from the front end of the sheave surface of the outer sheave 222 toward an apex of the sheave surface and having a predetermined thickness in the axial direction of the outer sheave 222, and a seat groove 221H formed on the sheave surface of the inner sheave 221, which corresponds to the inner flange, and having a complementary shape such that the inner flange 222F can be seated and fitted therein.

In this configuration, when the inner flange 221F is fitted in the seat groove 22H, the sheave surface of the inner sheave 221 and the sheave surface of the outer sheave 222 are precisely machined to be able to form one sheave surface, and in the first moving mode, the inner flange 221F is supported in close contact in the seat grove 221H by the second elastic member S2 in the first moving mode.

By the first locking mechanism described above, it is prevented that the outer sheave 222 is positioned away from the fixed sheave 210 further than a set position in the first moving mode, as described above.

Further, this configuration can also be applied to a second embodiment and a third embodiment of the present disclosure to be described below.

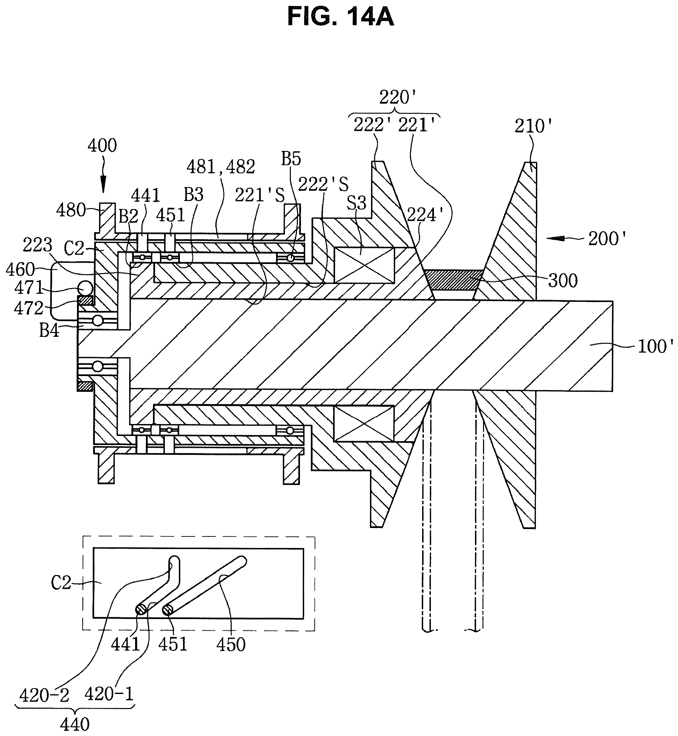

However, in the second embodiment of the present disclosure shown in FIGS. 14a to 14C, a second locking mechanism that aligns the sheave surface of an inner sheave 221' and the sheave surface of an outer sheave 222' to be able to form one sheave surface when an end of a fourth sleeve 222's extending to the rear surface of the outer sheave 222' is supported by a supporting block 223 formed at an end of a third sheave 221's extending to the rear surface of the inner sheave 221', so it is not necessarily required to apply the first locking mechanism.

Meanwhile, the second cam mechanism includes: a second cam hole 420 having a relief hole 420-1 formed on the circumferential surface of the first cylindrical cam C1 in the axial direction of the first cylindrical cam C1, and a supporting hole 420-2 formed on the circumferential surface of the first cylindrical cam C1 in the circumferential direction of the first cylindrical cam C1 and is continuously connected to the front end of the relief hole 420-1 adjacent to the fixed sheave 210; and a second pin 421 having a first end fixed to the inner sheave 221 and a second end that is coupled to the relief hole 420-1 or the supporting hole 420-2 in accordance with rotation of the first cylindrical cam C1 (see FIG. 10).

Since the first cylindrical cam C1 rotates while moving in the axial direction of the rotary shaft 100 together with the outer sheave 222, when the second pin 421 of the inner sheave 221 is coupled to the supporting hole 420-2 of the first cylindrical cam C1, relative movement in the axial direction of the rotary shaft 100 is not generated between the first cylindrical cam C1 and the inner sheave 221. Further, as will be described above, the first cylindrical cam C1 has a structure that allows for revolution with respect to the outer sheave 222 without relative movement in the axial direction of the rotary shaft 100, so it has the first moving mode in which the inner sheave 221 and the outer sheave 222 are operated as one sheave.

In this configuration, it is possible to set a continuous section of the first moving mode by adjusting the length of the supporting hole 420-2 formed on the circumferential surface of the first cylindrical cam C1 in the circumferential direction of the first cylindrical cam C1, and the first moving mode section may depend on the pitch radius of the inner sheave 221.

The relief hole 420-1 is a hole for providing a relief space in which the second pin 421 is not supported when the first cylindrical cam C1 is straightly moved, and when the first cylindrical cam C1 is rotated and the second pin 421 is positioned in the relief hole 420-1, the supporting hole 420-2 of the first cylindrical cam C1 no longer supports the inner sheave 221 through the second pin 421, so the outer sheave 222 is allowed to move with respect to the inner sheave 221, that is, the second moving mode is allowed.

The second pin 421 may be fixed to the first sleeve 221S axially extending from the rear surface of the inner sheave 221 (the surface opposite to the inner sheave 221 surface) and movably supported on the rotary shaft 100.

The first sleeve 221S may be configured to be able to be inserted in the inner surface of the first cylindrical cam C1.

Meanwhile, the first cylindrical cam C1 may have a structure that allows for revolution, that is, rotation with respect to the outer sheave 222 and presses the outer sheave 222 toward the fixed sheave 210 when the supporting hole 420-2 of the first cylindrical cam C1 is separated from the second pin 421 of the inner sheave 221 by rotation of the first cylindrical cam C1.

To this end, the first cylindrical cam C1 and the outer sheave 222 may be coupled through a bearing not shown, or, as shown in FIG. 10, a locking hole 430 may be formed on the circumferential surface in the circumferential direction of the first cylindrical cam C1 and a locking pin 431 having a first end fixed to the outer sheave 222 and a second end coupled to the locking hole 430 may be provided.

The locking pin 431 may be configured to be fixed to the rear surface of the outer sheave 222.

In more detail, the locking pin 431 is fixed to the second sleeve S axially extending from the rear surface of the outer sheave 222 and movably supported on the outer circumferential surface of the first sleeve 221S.

The second sleeve 222S may be configured to be able to be inserted in the inner surface of the first cylindrical cam C1.

The locking hole 430 serves to allow the first cylindrical cam C1 to rotate with respect to the outer sheave 222 but to restrict movement of the first cylindrical cam C1 relative to the outer sheave 222 in the axial direction of the rotary shaft 100, that is, restrict relative movement between the first cylindrical cam C1 and the outer sheave 222.

According to this structure, the spring pressed variable pitch pulley 200 for a belt-pulley type continuously variable transmission according to the first embodiment of the present disclosure performs, when the second pin 421 is positioned in the supporting hole 420-1 of the first cylindrical cam C1 and the first cylindrical cam C1 is coupled to the inner sheave 221 through the second pin 421 with the locking pin 431 is locked in the locking hole 430 in accordance with rotation of the first cylindrical cam C1, the first moving mode in which the first cylindrical cam C1 presses, 421 by the first elastic member S1, the inner sheave 221 toward the fixed sheave 210 through the second pin, and simultaneously, the sheave surface of the outer sheave 222 is aligned with the sheave surface of the inner sheave 221 by the first locking mechanism and the second elastic member S2,.

Further, when the supporting hole 420-2 is separated from the second pin 421 of the inner sheave 221 in accordance with rotation of the first cylindrical cam C1 and then the second pin 421 is positioned in the relief hole 420-1, the wall forming the relief hole 420-1 does not support the inner sheave 221 through the second pin 421, the first cylindrical cam C1 and the inner sheave 221 are decoupled, and accordingly, the second moving mode in which the wall forming the locking hole 430 of the first cylindrical cam C1 presses the outer sheave 222 toward the fixed sheave 210 through the locking pin 431 is performed.

It is preferable to start the second moving mode when the front end of the inner sheave 221 maximally approaches the facing front end of the fixed sheave 210 because a wide gear ratio range can be obtained.

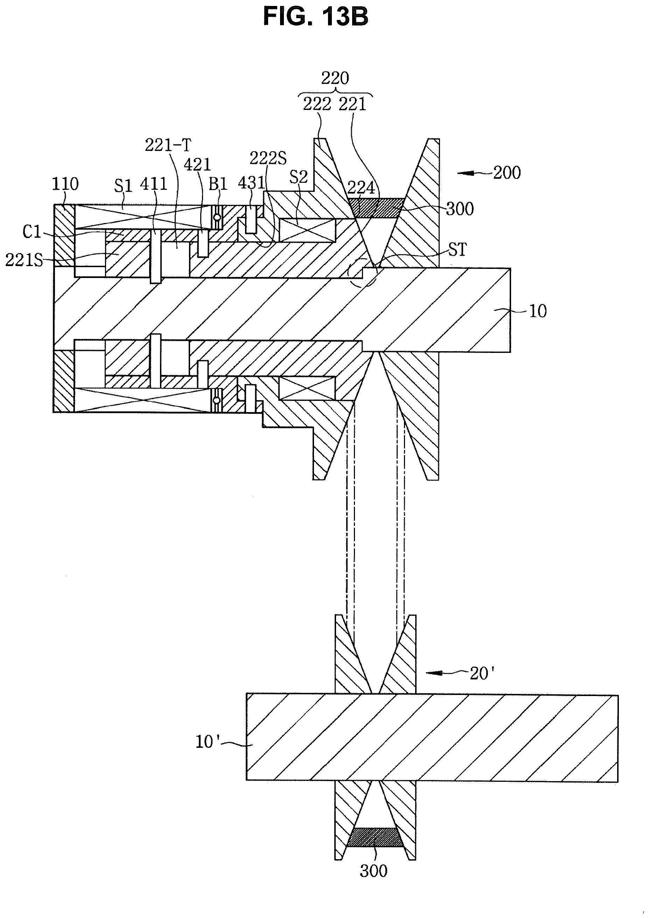

As shown in FIG. 13b, it may be possible to provide a stopper structure ST configured by forming steps between the inner sheave 221 and the rotary shaft 100, as apparent to those skilled in the art, before the front end of the inner sheave 221 and the front end of the fixed sheave 210 come in contact with each other so that the inner sheave 221 no longer moves toward the fixed sheave 210.

Of course, the stopper structure ST can be applied to not only the first embodiment of the present disclosure, but also the second embodiment and the third embodiment of the present disclosure to be described below.

Meanwhile, a friction reduction member B1 for reducing friction due to rotation of the first cylindrical cam C1, for example, a first bearing B1 may be installed between the first cylindrical cam C1 and the first elastic member S1.

A first oblong hole 221T (see FIG. 10) may be formed in the first sleeve 221S in the axial direction of the first sleeve 221S to be able to prevent the first sleeve 221S from being interfered with by the first pin 411 fixed to the rotary shaft 100 when the inner sheave 221 is moved in the axial direction of the rotary shaft 100.

FIG. 11 shows a modified embodiment of the spring pressed variable pitch pulley 200 for a belt-pulley type continuously variable transmission according to the first embodiment, in which the operation principle is the same as that of the first embodiment, but the shapes of the second sleeve 222S' of the outer sheave and the first cylindrical cam C1' are different from those of the first embodiment. In more detail, as for the second sleeve 222S', since the second sleeve 222S' is longer than the second sleeve 222S according to the first embodiment, the outer sheave 222 is stably radially stacked on the inner sheave 221, and a 2-1 oblong hole 222T'-1 is formed in the second sleeve 222S' in the axial direction of the second sleeve 222S' to be able to prevent the second sleeve 222S' from being interfered with by the first pin 411 fixed to the rotary shaft 100 when the outer sheave 222 is moved in the axial direction of the rotary shaft 100. Further, it is different from the first embodiment in that a 2-2 oblong hole 222T'-2 is formed in the second sleeve 222S' in the axial direction of the second sleeve 222S' to be able to prevent the second sleeve 222S' from being interfered with by the second pin 421 fixed to the inner sheave 221 when the outer sheave 222 is moved in the axial direction of the rotary shaft 100.

In this case, the 2-1 oblong hole 222T'-1 and the 2-2 oblong hole 222T'-2 may be formed as one long oblong hole, as shown in the figures.

Further, as for a first cylindrical cam C1", it has a structure in which the entire inner circumferential surface thereof is supported on the outer circumferential surface of the second sleeve 222S', and the positions of a locking groove 430' and a locking pin 431' are different.

The spring pressed variable pitch pulley 200 for belt-pulley type continuously variable transmission according to the first embodiment of the present disclosure having this configuration, as described above, can be applied to any one of a driving shaft and a driven shaft, is driven by a shift control device of the "adjustable shaft center-to-center distance shift type" when it is applied to a driving shaft, and is driven by a shift control device of the "fixed shaft center-to-center distance shift type" when it is applied to a driven shaft. In all of the two types, the first elastic member S1 is compressed or extended in response to tension of a belt that is changed by a shift control device, whereby the moving sheave 220, that is, the inner sheave 221 and the outer sheave 222 are moved.

Hereafter, shifting operation of the spring pressed variable pitch pulley 200 for a belt-pulley type continuously variable transmission according to the first embodiment of the present disclosure is described, and for the convenience of description, a belt-pulley type continuously variable transmission in which the spring pressed variable pitch pulley 200 is applied to the rotary shaft 100 that is a driving shaft, the moving sheave 220 is driven by the shift control device 40 of the "adjustable shaft center-to-center distance shift type"(see FIGS. 2a and 2b), and an invariable pitch pulley 10' is installed on a driven shaft is exemplified.

First, as shown in FIG. 9a, the spring pressed variable pitch pulley 200 for a belt-pulley type continuously variable transmission according to the first embodiment of the present disclosure is positioned apart from the driven shaft 10' by the shift control device 40 of the "adjustable shaft center-to-center distance shift type" (see FIGS. 2a and 2b) not shown before it is operated, and accordingly, the shaft center-to-center distance between the rotary shaft 100 and the driven shaft 10' is large, so tension of the belt 300 increases.

Accordingly, the moving sheave 220 and the first cylindrical cam C1 are moved to the left and compress the first elastic member S1, and in this case, the pitch diameter of the spring pressed variable pitch pulley 200 is minimized, whereby it is in a low-speed gear ratio state.

This state, as shown in FIG. 9a, is a state in which the sheave surface of the inner sheave 221 and the sheave surface of the outer sheave 222 have been aligned to form one sheave surface.

The first moving mode maintains the state as long as the belt 300 is in contact with the sheave surface of the inner sheave 221 and the sheave surface of the fixed sheave 210 in the belt groove.

Meanwhile, since the first cylindrical cam C1 has a structure that is rotated while moving in the axial direction of the rotary shaft 100 by the first cam mechanism, the rotation position of the first cylindrical cam C1 depends on the axial direction of the first cylindrical cam C1 relative to the rotary shaft 100, and in the low-speed gear ratio state of the spring pressed variable pitch pulley 200 according to the first embodiment of the present disclosure, the rotation positions of the first cam hole 410, the second cam hole 420, and the locking hole 430 of the first cylindrical cam C1 that correspond to the first pin 411, the second pin 421, and the locking pin 431 are as shown in FIG. 10.

Referring to FIGS. 9a and 10, since the second pin 421 of the inner sheave 221 is coupled to the supporting hole 420-2 of the first cylindrical cam C1, the inner sheave is restricted in movement in the axial direction of the rotary shaft 100 with respect to the first cylindrical cam C1. Similarly, since the locking pin 431 of the outer sheave 222 is coupled to the locking hole 430 of the first cylindrical cam C1, the outer sheave 222 is restricted in movement in the axial direction of the rotary shaft 100 with respect to the first cylindrical cam C1.

As described above, in the low-speed gear ratio state of the variable pitch pulley 200, the inner sheave 221 and the outer sheave 222 are coupled to the first cylindrical cam C1 such that movement relative to the first cylindrical cam C1 in the axial direction of the rotary shaft 100 is restricted, so the inner sheave 221 and the outer sheave 222 are not moved with respect to each other.

Accordingly, the inner sheave 221 and the outer sheave 222 act as one integrated moving sheave 220 coupled through the first cylindrical cam C1.

Considering the above coupling in a more strict meaning, since a tolerance exists at the locking hole 430 of the first cylindrical cam C1 and the locking pin 431 of the outer sheave 222, a gap may exist between the outer sheave 222 and the first cylindrical cam C1, but the inner flange 222F of the outer sheave 222 is seated in close contact in the seat groove 221H of the inner shave by the first locking mechanism and the second elastic member S2 described above, so the outer sheave 222 and the inner sheave 221 are aligned to form one sheave surface, whereby the outer sheave 222 and the first cylindrical cam C1 can be maintained in the coupled state without a gap.

Thereafter, when the shift control device 40 of the "adjustable shaft center-to-center distance shift type" (see FIGS. 2a and 2b) is moved toward the driven shaft 10' with the rotary shaft 100 being rotated by a driving source not shown, the shaft center-to-center distance between the rotary shaft 100, which is a driving shaft, and the driven shaft 10' decreases.

Accordingly, the tension of the belt 300 about to decrease, but the first elastic member S1 pushes the first cylindrical cam C1 toward the fixed sheave 210 by immediately responding to tension variation of the belt 300, and accordingly, the moving sheave 220 integrated through the first cylindrical cam C1, that is, the inner sheave 221 and the outer sheave 222, is simultaneously moved toward the fixed sheave 210, that is, is moved into the first moving mode state, and pushes the belt 300 wound in the belt groove outward in the radial direction of the spring pressed variable pitch pulley 200, whereby the pitch diameter of the variable pitch pulley 200 installed on the rotary shaft 100 that is a driving shaft increases.

In this process, the first cylindrical cam C1 rotates while moving toward the fixed sheave in the axial direction of the rotary shaft 100, as described above, but as long as the belt 300 is in contact with the sheave surface of the inner sheave 221 and the sheave surface of the outer sheave 222 or is in contact with the interface 224 between the sheave surface of the inner sheave 221 and the sheave surface of the outer sheave 222 and the sheave surface of the fixed sheave 210, the second pin 421 is positioned in the region of the supporting hole 420-2 of the first cylindrical cam C1, whereby the first moving mode state is maintained.

However, as shown in FIG. 9b, when the moving sheave 220 is further moved toward the fixed sheave 210 and the belt 300 comes in contact with the sheave surface of the outer sheave 222 and the sheave surface of the fixed sheave 210 across the interface 224, the supporting hole 420-2 of the first cylindrical cam C1 is separated from the second pin 421, whereby the second pin 421 is positioned in the region of the relief hole 420-1.

In this state, the first cylindrical cam C1 cannot support and press the inner sheave 2221 toward the fixed sheave 210 through the second pin 421 because the relief hole 420-1 is formed in the axial direction of the first cylindrical cam C1.

However, since the locking pin 431 of the outer sheave 222 is coupled to the locking hole 430 of the first cylindrical cam C1, only the outer sheave 222 is pressed toward the fixed sheave 210 through the first cylindrical cam C1 pressed toward the fixed sheave 210 by the first elastic member S1, that is, the second moving mode is implemented.

When the second moving mode is started, the inner sheave 221 comes in contact with the stopper ST (see FIG. 13) of the rotary shaft 100, so the inner sheave 221 is restricted in movement toward the fixed sheave 210 in the axial direction with respect to the rotary shaft 100.

Thereafter, as shown in FIG. 9c, when the spring pressed variable pitch pulley 200 according to the present disclosure is further moved toward the driven shaft 10' by the shift control device 40 of the "adjustable shaft center-to-center distance shift type" (see FIGS. 2a and 2b), the shaft center-to-center distance between the rotary shaft 100, that is, a driving shaft, and the driven shaft 10' decreases.

Accordingly, the tension of the belt 300 about to decrease, but the first elastic member S1 pushes the first cylindrical cam C1 toward the fixed sheave 210 by immediately responding to tension variation of the belt 300, and simultaneously, the first cylindrical cam C1 pushes the outer sheave 222 toward the fixed sheave 210 through the locking pin 241.

Accordingly, as the outer sheave 222 is moved toward the fixed sheave 210 while compressing the second elastic member S2, the pitch diameter of the spring pressed variable pitch pulley 200 installed on the rotary shaft 100 that is a driving shaft further increases and the diameter of the invariable pitch pulley 20' on the driven shaft 10' does not change, whereby up-shift is implemented.

However, when the moving sheave 220, that is, the inner sheave 221 and the outer sheave 222 are moved in the opposite way to the above description by the shift control device of the "adjustable shaft center-to-center distance shift type" not shown, as those skilled in the art can understand, down-shift is implemented.

### Second Embodiment

Differences from the first embodiment are described for easier understanding of the technology according to the second embodiment of the present disclosure.

In the first embodiment, the inner sheave and the outer sheave are moved together or only the outer sheave is moved by the elasticity of a first elastic member responding to variation of tension of a belt and an impellent force that is applied by a moving sheave-positioning unit.

In comparison with this, in this embodiment, an inner sheave and an outer sheave can be moved together or only the outer sheave can be moved by a shift control device of a rotation control type of a "fixed shaft center-to-center distance shift type". Further, the shift control device may include a rotation control device that automatically or manually generate a rotation force. The rotation control device may be a motor, a manual rotation handle, etc.

Further, the moving sheave-positioning unit axially moves and rotates (that is, turns) simultaneously in the first embodiment. In this embodiment, the rotation control device that is a moving sheave-positioning unit does not move axially nor rotate, and only a shaft for applying a shifting force (e.g., the shaft of a motor) rotates.

Hereafter, a preferred second embodiment of the present disclosure is described in detail with reference to FIGS. 14a to 14c, FIG. 15, and FIGS. 16a to 16c.

First, referring to FIG. 14a, a variable pitch pulley 200' for a belt-pulley type continuously variable transmission according to the second embodiment of the present disclosure includes: a rotary shaft 100'; a fixed sheave 210' installed on the rotary shaft 100'; and a moving sheave 220' disposed to form a belt groove, in which a belt 300 is wound, between the moving sheave 220' and the fixed sheave 210', and installed on the rotary shaft 100' to be able to be moved in the axial direction of the rotary shaft 100' by shift control of a shift control device 400 of the rotation control type of the "fixed shaft center-to-center distance shift type" , in which the moving sheave 220' includes an inner sheave 221' installed to be able to move in the axial direction of the rotary shaft 100', and an outer sheave 222' radially stacked on the outer circumferential surface of the inner sheave 221' and installed to be able to move in the axial direction of the rotary shaft 100' with respect to the inner sheave 221'.

In order to be able to perform any one of a third moving mode in which the inner sheave 221' and the outer sheave 222' are simultaneously moved in the axial direction of the rotary shaft 100' and a fourth moving mode in which only the outer sheave 222' is moved in the axial direction of the rotary shaft 100' with respect to the inner sheave 210', the shift control device 400 of the rotation control type of the "fixed shaft center-to-center distance shift type" is configured to determine relative positions of the inner sheave 221' and the outer sheave 222' such that the inner sheave 221' and the outer sheave 222' are simultaneously moved in accordance with rotation control of the shift control device 400 in the third moving mode, and the inner sheave 221' runs idle while maintaining its position and only the outer sheave 222' can be moved in accordance with rotation control of the shift control device 400 in the fourth moving mode.

To this end, the shift control device 400 may include: a second rotary member C2 radially stacked on the rotary shaft 100' to be able to be rotated by a rotation control device 460 and run idle with respect to rotation of the rotary shaft 100'; a first driven member 441 having a first end cam-coupled to the second rotary shaft C2 such that the inner sheave 221' can be moved in the axial direction of the rotary shaft 100', and a second end installed on the inner sheave 221' to run idle with respect to rotation of the inner sheave in accordance with rotation of the second rotary member C2, ; and a second driven member 451 having a first end cam-coupled to the second rotary member C2 such that the outer sheave 222' can be moved in the axial direction of the rotary shaft 100' and a second end installed on the outer sheave 222' to be able to run idle with respect to rotation of the outer sheave in accordance with rotation of the second rotary member C2.

Further, in accordance with rotation of second rotary member C2, the shift control device 400 has the third mode in which, the inner sheave 221' and the outer sheave 222' are simultaneously moved in the axial direction of the rotary shaft 100', or has the fourth mode in which as the second rotary member C2 is rotated, only the outer sheave 222' is moved in the axial direction of the rotary shaft 100' with respect to the inner sheave 221'.

In this configuration, the third moving mode is performed, with the sheave surface of the inner sheave 222' and the sheave surface of the outer sheave 222' aligned to form one sheave surface, when the belt 300 comes in contact with a sheave surface of the inner sheave 221' and a sheave surface of the fixed sheave 210' in the belt groove or comes in contact with an interface 224' between the sheave surface of the inner sheave 221' and a sheave surface of the outer sheave 222' and the sheave surface of the fixed sheave 210'; and the fourth moving mode is defined to be performed when the belt 300 comes in contact with the sheave surface of the outer sheave 222' and the sheave surface of the fixed sheave 210' in the belt groove.

The rotary shaft 100' may be a driving shaft or may be installed on a driving shaft, and the shift control device 400 of the rotation control type is installed on the rotary shaft 100', which is a driving shaft, and is configured to control movement of the moving sheave 220' by controlling rotation of the second rotary member C2 particularly corresponding to a shifting shaft of the "fixed shaft center-to-center distance shift type".

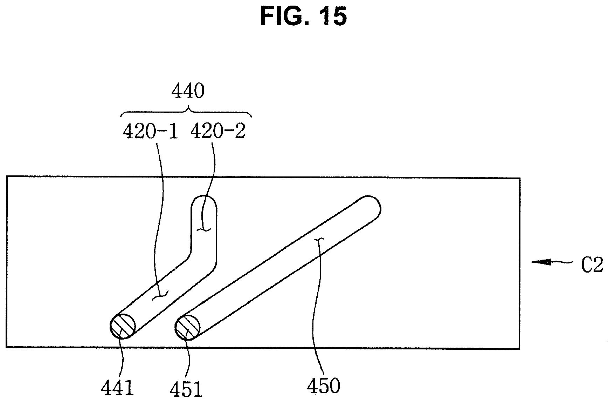

The second rotary member C2, as shown in FIGS. 14a and 15, may be disposed coaxially with the rotary shaft 100' and may be a second cylindrical cam having a cylindrical shape.

Meanwhile, a third cam hole 440 to which the first driven member 441 is cam-coupled and a fourth cam hole 450 to which the second driven member 451 is cam-coupled may be formed on the circumferential surface of the second cylindrical cam C2.

In this configuration, the third cam hole 440 may be composed of a 3-1 cam hole 440-1 formed at an angle on the circumferential surface of the second cylindrical cam C2 in the axial direction of the second cylindrical cam C2, and a 3-2 cam hole 440-2 continuously connected to the front end of the 3-1 cam hole 440-1, which is adjacent to the fixed sheave 210', and formed on the circumferential surface of the second cylindrical cam C2 in the circumferential direction of the second cylindrical cam C2.

The 3-2 cam hole 440-2 is formed to restrict movement of the inner sheave 221' relative to the outer sheave 222' in the axial direction of the rotary shaft 100' when the second cylindrical cam C2 is rotated.

Further, the fourth cam hole 450 may be formed at an angle on the circumferential surface of the second cylindrical cam C2 in the axial direction of the second cylindrical cam C2.

The 3-1 cam hole 440-1 and the fourth cam hole 450 may be configured to have the same inclination, which is for simultaneously moving the inner sheave 221' and the outer sheave 222' in the axial direction of the rotary shaft 100' with the sheave surface of the inner sheave 221' and the sheave surface of the outer sheave 222' aligned in a line, that is, the third moving mode, with the second cylindrical cam C2 being rotated when the wall of the second cylindrical cam C2 that forming the 3-1 cam hole 440-1 presses the first driven member 441 and the wall of the second cylindrical cam C2 that forming the fourth cam hole 450 presses the second driven member 451

In this configuration, the fourth cam hole 450 may be manufactured to have a tolerance larger than that of the 3-1 cam hole 440-1, which is for moving the inner sheave 221' in the axial direction of the rotary shaft 100' by pressing only the first driven member 441 through the wall of the second cylindrical cam C2 that forms the 3-1 cam hole 440-1 in the third moving mode.

In this configuration, when the fourth cam hole 450 may be manufactured to have a tolerance larger than that of the 3-1 cam hole 440-1, the sheave surface of the outer sheave 222' stays aligned with the sheave surface of the inner sheave 221' by the second locking mechanism described in the first embodiment of the present disclosure and a third elastic member, that is, a spring S to be described below, so it is possible to simultaneously move the inner sheave 221' and the outer sheave 222' by moving only the inner sheave 221'.

The second locking mechanism is a structure for preventing the outer sheave 222' from moving apart from the fixed sheave 210' with the sheave surface of the inner sheave 221' aligned with the sheave surface of the outer sheave 222', that is, the third moving mode forming one sheave surface, and was described in detail in the first embodiment of the present disclosure, so it is not described here.

Further, the third elastic member S3 that is the spring described above is further provided between the inner sheave 221' and the outer sheave 222' in the axial direction of the rotary shaft 100'. A first end of the third elastic member S3 is supported on the inner sheave 221' to press the outer sheave 222' away from the fixed sheave 210' and a second end thereof is supported on the outer sheave 222' to press the inner sheave 222' toward the fixed sheave 210'.

The third elastic member S3 suppresses movement of the outer sheave 222' toward the fixed sheave 210' in the third moving mode in which the sheave surface of the inner sheave 221' is aligned with the sheave surface of the outer sheave 222', that is, forms one sheave surface, thereby serving to maintain the third moving mode state and prevent separation between the inner sheave 221' and the outer sheave 222'.

By this configuration, when the second cylindrical cam C2 is rotated, the inner sheave 221' and the outer sheave 222' can move the same distance in the axial direction of the rotary shaft 100', so the inner sheave 221' and the outer sheave 222' can be operated like one sheave.

Meanwhile, the first driven member 441 may be configured to be fixed to a second bearing B2 coaxially installed at the inner sheave 222' to be able to run idle with respect to rotation of the inner sheave 221'.

Similarly, the second driven member 451 may be configured to be fixed to a third bearing B3 installed at the outer sheave 222' to be able to run idle with respect to rotation of the outer sheave 222'.

In this configuration, the second bearing B2 is installed at a third sleeve 221'S axially extending from the rear surface of the inner sheave 221' and movably supported on the rotary shaft 100', in more detail, at a supporting block 223. The third bearing B3 may be configured to be fixed to a fourth sleeve 222'S axially extending from the rear surface of the outer sheave 222' and movably supported on the third sleeve 221'S.

Further, the second cylindrical cam C2 may be fixed to a fourth bearing B4 installed at the rotary shaft 100' and configured to run idle with respect to rotation of the rotary shaft 100'.

Further, the third bearing B5 may be configured to be fixed to the fourth sleeve 222'S axially extending from the rear surface of the outer sheave 222' and movably supported on the third sleeve 221'S.

The third bearing B5 serves to have the second cylindrical cam C2 and the fourth sleeve 222'S run idle each other and may be omitted when the length of the second cylindrical cam C2 is short.

The third bearing B5 can move in the axial direction of the rotary shaft 100' with respect to the fourth sleeve 222'S, but is configured to be restricted in circumferential movement, that is, rotation movement.

For the movement characteristics described above, particularly, a key, spline, or ball spline structure (not shown) is provided between the outer race of the third bearing B5 and the inner circumferential surface of the cylindrical cam, which is apparent, so it is not shown.

Meanwhile, the first driven member 441, as shown in FIG. 14a, may be configured as a first driven pin coupled to the third cam hole 440' of the second cylindrical cam C2, and the second driven member 451 may be configured as a second driven pin coupled to the fourth cam hole 450 of the second cylindrical cam 100'.

That is, in the embodiment shown in FIG. 14a, the first driven member 441 and the second driven member 451 are configured as single parts, that is, a first driven pin and a second driven pin, respectively.

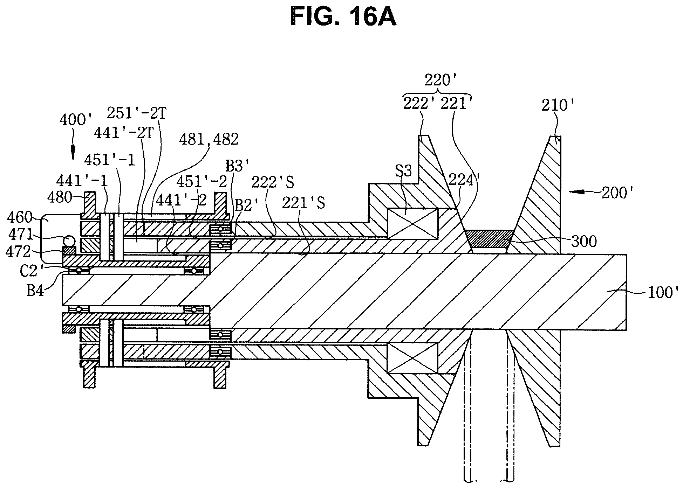

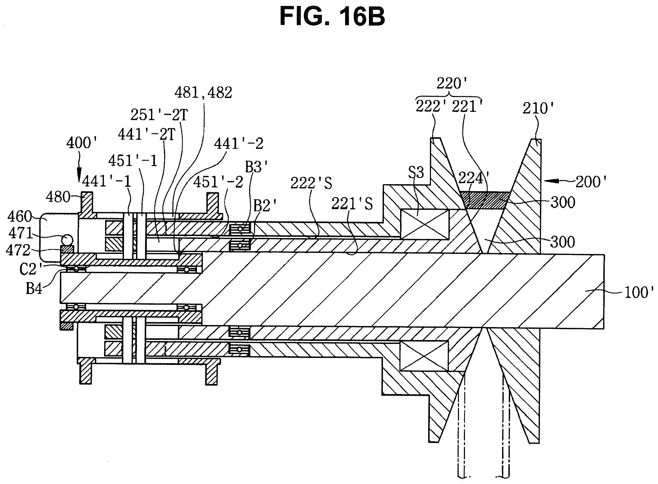

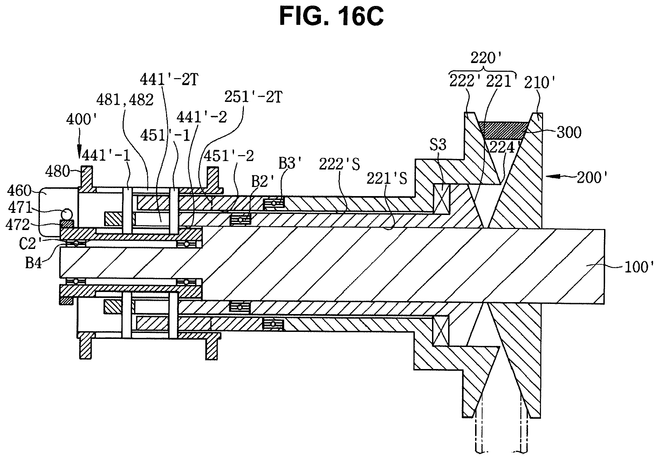

In a modified embodiment of the second embodiment shown in FIGS. 16a to 16c, the first driven member 441 may be composed of a first driven pin 441 '-1 coupled to the third cam hole 440' of the second cylindrical cam C2' and a first movement transferring member 441'-2 having a first end fixed to the first driven pin 441'-1 and a second end fixed to a second bearing B2'; and the second driven member 451 may be composed of a second driven pin 451'-1 coupled to the fourth cam hole 450 of the second cylindrical cam C2' and a second movement transferring member 451'-2 having a first end fixed to the second driven pin 451'-1 and a second end fixed to a third bearing B3'.

The first movement transferring member 441'-2 and the second movement transferring member 451'-2 may be configured in a cylindrical shape like the second cylindrical cam C2' and may be disposed coaxially with the rotary shaft 100'.

In this case, the diameter of the first movement transferring member 441 '-2 is larger than the diameter of the second cylindrical cam C2' and the diameter of the second movement transferring member 451'-2 is larger than the diameter of the first movement transferring member 441'-2.

However, depending on design, the diameter of the second cylindrical cam C2' may be changed regardless of the above embodiment.

Further, a third oblong hole 241-2T may be formed at the first movement transferring member 441'-2 in the axial direction of the first movement transferring member 441'-2 to be able to prevent the second movement transferring member 451'-2 from being interfered with by the second driven pin 451'-1 when the second movement transferring member 451'-2 is moved in the axial direction of the rotary shaft.

Similarly, a fourth oblong hole 251-2T may be formed at the second movement transferring member 451'-2 in the axial direction of the second movement transferring member 451'-2 to be able to prevent the second movement transferring member 451'-2 from being interfered with by the first driven pin 441'-1 when the second movement transferring member 451'-2 is moved in the axial direction of the rotary shaft.

Meanwhile, when the inner sheave 221' and the outer sheave 222' are moved in the same direction as the rotary shaft 100' by rotation of the rotary shaft 100', a rotation force is transmitted to the first driven pin 441 or 441 '-1 and the second driven pin 451 or 451'-1, whereby a rotation position of the second cylindrical cam C2 or C2' set by a rotation control device 460 may be changed.

The second embodiment according to the present disclosure and the modified embodiment thereof, in consideration of these features, provide a guide member 480 that is fixed to any one of the following components to prevent the first driven pin 441 or 441'-1 and the second driven pin 451 or 451'-1 from being rotated in the same direction as the inner sheave 221' and the outer sheave 222' by rotation of the inner sheave 221' and the outer sheave 222' and to allow the first driven pin 441 or 441'-1 and the second driven pin 451 or 451'-1 to straightly move only in the axial direction of the rotary shaft 100'.
- a casing (not shown) of the variable pitch pulley 200' for a belt-pulley type continuously variable transmission
- a base (not shown) on which the variable pitch pulley 200' for a belt-pulley type continuously variable transmission is installed or the floor of a place where the variable pitch pulley 200' for a belt-pulley type continuously variable transmission is installed
- a metal fitting (not shown) fixed to a base (not shown) on which the variable pitch pulley 200' for a belt-pulley type continuously variable transmission is installed or a metal fitting (not shown) fixed on the floor of a place where the variable pitch pulley 200' for a belt-pulley type continuously variable transmission is installed

The guide member 480 is disposed in the axial direction of the rotary shaft 100' in consideration of the fact that the first driven pin 441 or 441'-1 and the second driven pin 451 or 451'-1 are moved in the axial direction of the rotary shaft 100'.

A first guide hole 481 in which the first driven pin 441 or 441'-1 is inserted and a second guide hole 482 in which the second drive pin 451 or 451'-1 is inserted are formed in the guide member 480, and the first guide hole 481 and the second guide hole 482 may be formed as one guide hole as long as there is no problem in guiding of the first driven pin 441 or 441'-1 and the second drive pin 451 or 451'-1.

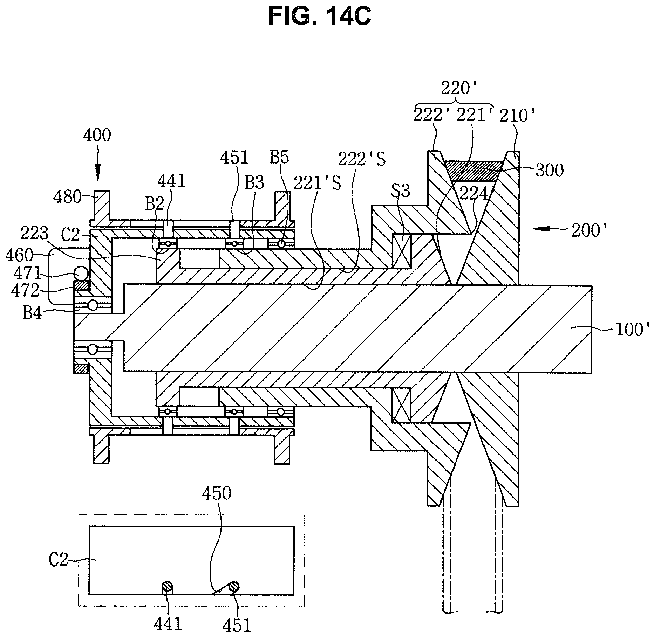

The variable pitch pulley 200' for a belt-pulley type continuously variable transmission having this configuration according to the second embodiment of the present disclosure, referring to FIGS. 14a and 14c, performs, in accordance with rotation of second cylindrical cam C2, the third moving mode in which the second cylindrical cam C2 simultaneously moves the inner sheave 221' and the outer sheave 222' toward the fixed sheave 210' through the first driven pin 441 and the second driven pin 451, when the first driven pin 441 is coupled to the 3-1 cam hole 440-1 of the second cylindrical cam C2 and the second driven pin 451 is coupled to the fourth cam hole 450 of the second cylindrical cam C2.

Further, the variable pitch pulley 200' performs, with the second driven pin 451 coupled to the fourth cam hole 450 of the second cylindrical cam C2, the fourth moving mode in which the inner sheave 221' to which the first driven pin 441 is fixed is restricted in movement in the axial direction of the rotary shaft 100' by the circumferentially formed 3-2 cam hole 440-2, but the second cylindrical cam C2 moves the outer sheave 222' toward the fixed sheave 210' through the second driven pin 451, when the 3-2 cam hole 440-2 of the second cylindrical cam C2 is coupled to the first driven pin 441 after the second cylindrical cam C2 keeps rotating and the 3-1 cam hole 440-1 of the second cylindrical cam C2 is separated from the first driven pin 441.

In this case, since the inner sheave 221' is restricted in movement in the axial direction of the rotary shaft 100' by the circumferentially formed 3-2 cam hole 440-2, it is not necessarily required to apply the stopper structure ST described above to the second embodiment, but it may be possible to apply the stopper structure ST to the second embodiment as a fail-safe device against damage to the first driven pin 441, etc., depending on designers.

Further, it is possible to set a continuous section of the third moving mode by adjusting the length of the 3-1 cam hole 440-1 formed at an angle on the circumferential surface of the second cylindrical cam C2 or Cs' in the axis direction of the second cylindrical cam C2 or Cs', and the third moving mode section may depend on the pitch radius of the inner sheave 221'.

The rotation control device 460 may be configured as a motor or a rotary handle that is manually operated.

Meanwhile, when the belt-pulley type continuously variable transmission is being driven, the impellent force applied to the inner sheave 221' and the outer sheave 222' by tension of the belt 300 may be transmitted to the second cylindrical cam C2 or C2' through the first driven pin 441 or 441'-1 and the second drive pin 451 or 451'-1, whereby the rotation position of the second cylindrical cam C2 or C2' set by the rotation control device 460 may be changed.

In order to prevent this situation, in the second embodiment of the present disclosure (see FIGS. 14a to 14c) and the modified embodiment thereof (see FIGS. 16a to 16c), the rotation control device 460 and the second cylindrical cam C2 or C2' are worm-coupled, whereby it is possible to prevent the set position of the second cylindrical cam C2 or C2' from being changed by the impellent force applied to the inner sheave 221' and the outer sheave 222', as described above.

In detail, the worm gear-coupling of the rotation control device 460 and the second cylindrical cam C2 may be implemented by a worm 471 installed on the shaft of the rotation control device 460 and a worm wheel 472 coupled to the worm 471, installed on the second cylindrical cam C2, and transmitting a rotation force of the rotation control device 460 of the worm 471 to the second cylindrical cam C2.

Hereafter, shifting operation of the variable pitch pulley 200' for a belt-pulley type continuously variable transmission according to the second embodiment is described, and a belt-pulley type continuously variable transmission in which the variable pitch pulley 200' for a belt-pulley type continuously variable transmission according to the second embodiment of the present disclosure is applied to the rotary shaft 100' that is a driving shaft, the moving sheave 220' is driven by the shift control device 400 of the rotation control type of the "fixed shaft center-to-center distance shift type", and the spring pressed variable pitch pulley (not shown) for a belt-pulley type continuously variable transmission according to the first embodiment of the present disclosure is applied to the driven shaft 10 is exemplified.

Of course, it would be understood by those skilled in the art that when the spring pressed variable pitch pulley for a belt-pulley type continuously variable transmission according to the first embodiment of the present disclosure is applied to a driven shaft, the moving sheave and the fixed sheave are arranged in the opposite direction to the arrangement direction of the fixed sheave 221' and the moving sheave 222' according to the second embodiment of the present disclosure, that is, are arranged symmetrically, as sufficiently described in the related art.

First, as shown in FIG. 14a, in the variable pitch pulley 200' for a belt-pulley type continuously variable transmission according to the second embodiment of the present disclosure, before the variable pitch pulley 200' is operated, the moving sheave 220' is moved as far as possible from the fixed sheave 210' by the rotation control device 460 of the shift control device 400, so the pitch diameter is minimized.

In this state, with the sheave surface of the inner sheave 221' and the sheave surface of the outer sheave 222' aligned to form one sheave surface, that is, in the third moving mode, the belt 300 is in contact with the sheave surface of the inner sheave 221' and the sheave surface of the fixed sheave 220' in the belt groove.

Further, though not shown, it would be understood that, in the spring pressed variable pitch pulley for a belt-pulley type continuously variable transmission according to the first embodiment of the present disclosure installed on the driven shaft, the outer sheave of the moving sheave has been approached as close as possible to the fixed sheave, so the pitch diameter has been maximized in the second driving mode.

Since the pitch diameter of the driving shaft is minimized and the pitch diameter of the driven shaft is maximized, low-speed shifting is implemented.

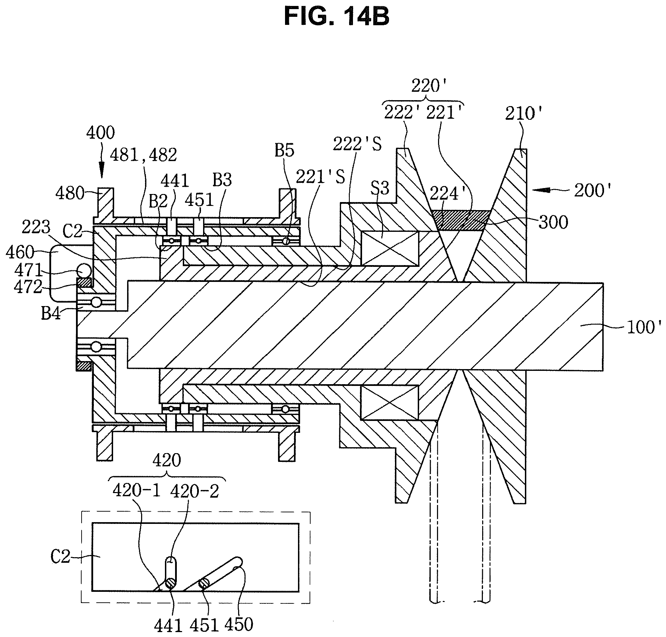

Thereafter, the rotary shaft 100' that is a driving shaft is rotated by a driving source not shown, and in this state, when the worm 471 and the worm wheel 472 are sequentially rotated and the second cylindrical cam C2 run idle with respect to rotation of the rotary shaft 100' in accordance with rotation of the rotation control device 460, as shown in FIG. 14b, in accordance with rotation of the second cylindrical cam C2, the wall of the second cylindrical cam C2 that forms the 3-1 cam hole 440-1 moves the inner sheave 221 toward the fixed sheave 221' through the first driven pin and simultaneously the wall of the second cylindrical cam C2 that forms the fourth cam hole 450 moves the outer sheave 222' toward the fixed sheave 221 through the second driven pin 451.

In this process, the first driving pin 441 and the second driven pin 451 are positioned in the guide holes 481 and 482 formed in the guide member 480, so they are moved toward the fixed sheave 210' while being guided in the axial direction of the rotary shaft 100'.

Since the 3-1 cam hole 440-1 and the fourth cam hole 450' have the same inclination, the inner sheave 221' and the outer sheave 222' simultaneously move the same distance toward the fixed sheave 210' in accordance with rotation of the second cylindrical cam C2, so the inner sheave 221' and the outer sheave 222' move as one moving sheave 220'.

As the inner sheave 221' and the outer sheave 222' move in this way, the pitch diameter of the variable pitch pulley 200' according to the second embodiment of the present disclosure increases and the belt 300 is moved outward from the variable pitch pulley 200', and then, in the third moving mode, the belt 300 simultaneously comes in contact with the interface 224' between the sheave surface of the inner sheave 221' and the sheave surface of the outer sheave 222' and the sheave surface of the fixed sheave 210' in the belt groove.

Further, though not shown, it would be understood that the outer sheave of the spring pressed variable pitch pulley for a belt-pulley type continuously variable transmission according to the first embodiment of the present disclosure installed on the driven shaft is moved in the same direction as the movement direction of the moving sheave 220' installed on the driving shaft 100', and the belt 300 comes in contact with the interface between the sheave surface of the inner sheave 221' and the sheave surface of the outer sheave 222' and the sheave surface of the fixed sheave in the belt groove with the sheave surface of the inner sheave 221' and the sheave surface of the outer sheave 222' aligned to form one sheave surface, that is, in the first moving mode.

Thereafter, when the second cylindrical cam C2 keeps rotating in the same direction through the rotation control device 460, the 3-1 cam hole 440-1 is separated from the first driven pin 441 and then, the first driven pin 441 is coupled to the 3-2 cam hole 440-2, with the second driven pin 451' coupled to the fourth cam hole 450' of the second cylindrical cam C2.

In this case, since the 3-2 cam hole 440-2 is circumferentially formed, a fourth moving mode, in which the wall forming the 3-2 cam hole 440-2 of the second cylindrical cam C2 restricts movement of the inner sheave 221' in the axial direction of the rotary shaft 100' through the first driven pin 441 but the wall of the second cylindrical cam C2 that forms the fourth cam hole 450 keeps moving the outer sheave 222' toward the fixed sheave 210' through the second driven pin 451, is performed, and then, the pitch diameter of the variable pitch pulley 200' is maximized (see FIG. 14c).

Further, though not shown, it would be understood that, in the spring pressed variable pitch pulley for a belt-pulley type continuously variable transmission according to the first embodiment of the present disclosure installed on the driven shaft, the inner sheave is positioned as far as possible from the fixed sheave with the belt 300 is contact with the sheave surface of the inner sheave and the sheave surface of the fixed sheave in the belt groove, so the pitch diameter has been minimized in the first moving mode.

As described above, since the pitch diameter of the variable pitch pulley 200' on the rotary shaft 100' that is a driving shaft is maximized, and the pitch diameter of the spring pressed variable pitch pulley according to the first embodiment of the present disclosure on the driven shaft not shown is minimized, up-shift is achieved.

However, when the moving sheave 220', that is, the inner sheave 221' and the outer sheave 222' are moved in the opposite way to the above description through the shift control device 400 of the rotation control type of the "fixed shaft center-to-center distance shift type", as those skilled in the art can understand, down-shift is implemented.

### Third Embodiment

This embodiment relates to a structure in which a belt can smoothly move across the interface between an inner sheave and an outer sheave. That is, a belt can smoothly move from the inner sheave to the outer sheave or from the outer sheave to the inner sheave, so it is possible to achieve reduction of damage to the belt, reduction of noise, etc.

In this embodiment, a convex portion and a concave portion are provided on the outer side, that is, the outer circumferential surface of the inner sheave that configures the interface of the inner sheave, and corresponding convex portion and concave portion are provided on the inner surface, that is, the inner circumferential surface of the outer sheave. The shapes of the convex portion and the concave portion are not limited, but may be formed by a combination of curves.

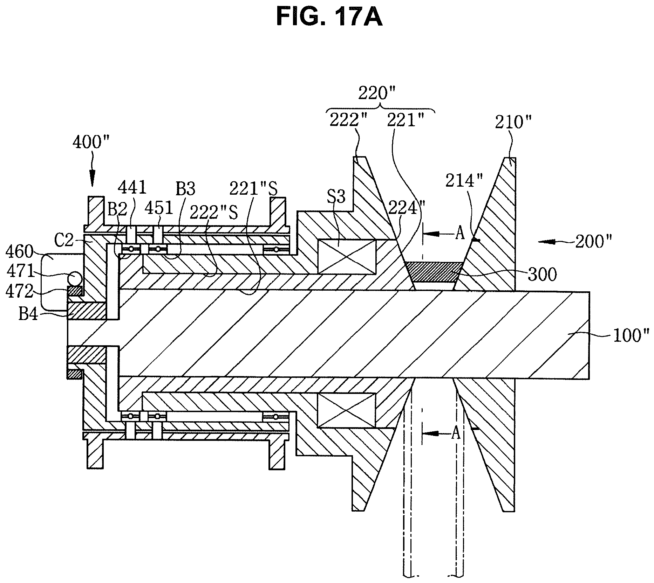

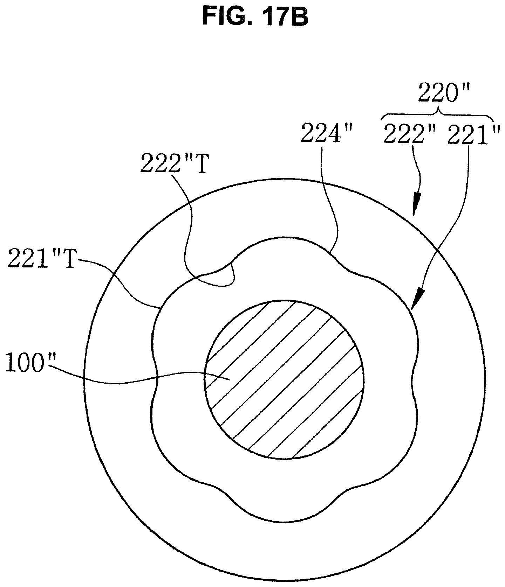

Hereafter, a preferred third embodiment of the present disclosure is described with reference to FIGS. 17a and 17b.

The structure of a variable pitch pulley for a belt-pulley type continuously variable transmission according to the third embodiment of the present disclosure includes: a rotary shaft 100"; a fixed sheave 210" installed on the rotary shaft 100"; and a moving sheave 200" disposed to form a belt groove, in which a belt 300 is wound, between the moving sheave 200" and the fixed sheave 210" and installed on the rotary shaft 100" to be able to move in the axial direction of the rotary shaft 100" by a shift control device 400" an "adjustable shaft center-to-center distance shift type" or a "fixed shaft center-to-center distance shift type".

In this configuration, the moving sheave 220" includes an inner sheave 221" installed to be able to move in the axial direction of the rotary shaft 100", and an outer sheave 222" radially stacked on the outer circumferential surface of the inner sheave 221" and installed to be able to move in the axial direction of the rotary shaft 100" with respect to the inner sheave 221".

An interface 224" between the sheave surface of the inner sheave 221" and the sheave surface of the outer sheave 222" may have a plurality of teeth that are engaged with each other in the circumferential directions of the inner sheave 221" and the outer sheave 222' when the sheave surface of the outer sheave 222" and the sheave surface of the inner sheave 221" are aligned to form one sheave surface by the shift control device 400".

The shift control device 400" may be a shift control device of the "fixed shaft center-to-center distance shift type" shown in FIG. 17a, or, though not shown, may be an shift control device of the "adjustable shaft center-to-center distance shift type", as those skilled in the art can understand.

In particular, the variable pitch pulley structure for a belt-pulley type continuously variable transmission according to the third embodiment of the present disclosure a structure in which the inner sheave 221" fills the inside of the outer sheave 222", so not only can the belt 300 smoothly run when moving from the inner sheave 221" to the outer sheave 222" or from the outer sheave 222" to the inner sheave 221", but it is also possible to reduce noise due to running of the belt, as compared with an interlacing sheave type of variable pitch pulley according to the related art.

When the interface 224" is formed in the shape of teeth, that is, a combination of continuous curves of convex portions and concave portions, it is advantageous for the belt 300 to enter or come out of the interface 224". This can act as an advantageous element for the running of the belt 300 when the belt 300 enters or comes out of the interface 224' because when a step or a gap is generated at the interface 224" due to a minute manufacturing tolerance or assembly tolerance of the rotary shaft 100", the inner sheave 221", the outer sheave 222", a key, a spline, a ball spline, or the like, by forming the interface 224" in the shape of teeth as in the third embodiment of the present disclosure rather than the shape of circle as in the first embodiment and the second embodiment of the present disclosure, the belt 300 does not come in contact with the step or the gap all at once but partially.

Further, in order for the belt 300 to more smoothly run, the shape of the teeth of the interface 224" may be continuously connected curves, for example, involute curves.

Further, in the third embodiment of the present disclosure that the edge of the sheave surface of the inner sheave 221" and the edge of the sheave surface of the outer sheave 222" that form the interface 224" minimize wear or damage of the belt 300. Also it is preferable the edge of the sheave surface of the inner sheave 221" and the edge of the sheave surface of the outer sheave 222" that form the interface 224" are machined into curved surfaces in order to enable the belt 300 to smooth move across the interface 224".

Meanwhile, teeth 221 "T formed on the circumferential surface of the inner sheave 221" and teeth 222"T formed on the inner circumferential surface of the outer sheave 222" make pairs, and have the number of teeth of at least three pairs.

The smaller the number of the teeth 221"T and 222"T formed at the curved interface 224", the more the inner sheave 221" and the outer sheave 222" are easily machined and the smaller the resistance between the belt 300 and the interface 224" is, so the belt 300 can easily run across the interface 224" of the fixed sheave 210" and the moving sheave 200".

It is preferable that a radial variation width of the interface 224" formed by engagement of the teeth 221"T of the inner sheave 221" and teeth 222"T of the outer sheave 222" is smaller than the height of the belt 300, and this is because the smaller the radial width of the interface 224" that the belt 300 moves across, the more advantageous it is in quick shifting.

Further, a groove 214" having the same shape as the interface 224" may be formed on the sheave surface of the fixed sheave 210" that corresponds to the interface 224" between the sheave surface of the inner sheave 221' 'and the sheave surface of the outer sheave 222".

This configuration may also serve not only to enable both running sides of the belt 300, which is wound in the belt groove formed by the fixed sheave 210" and the moving sheave 200", to be uniformly worn by the groove formed by the interface 224" and the groove formed at the fixed sheave 210", but also to apply the same friction to both sides of the belt 300.

Several cam holes are described above in the specification, but the cam holes may be replaced with cam grooves, and the cam hole and the cam groove should be understood as being equivalent.

Further, the drawings illustrating the present disclosure were shown symmetrically up and down, but the components may be freely arranged to be able to maintain rotation balance when a rotary shaft is rotated, for example, depending on the design conditions such as 180 degrees, 120 degrees, or 90 degrees around the rotary shaft.

Further, the detailed description and the accompanying drawings were provided for general understanding of the present disclosure, but the description and drawings should not be construed as limiting the right of claims in the specification.

### [Industrial Applicability]

The present disclosure can be applied to most fields in which rotation power is transmitted using a belt-pulley type continuously variable transmission, and particularly, can be immediately applied to vehicles, scooters, snow mobiles, playthings, farming machine, and various machines that transmit power using a belt-pulley.

## Claims

1. A spring pressed variable pitch pulley for a belt-pulley type continuously variable transmission, the spring pressed variable pitch pulley comprising:
a rotary shaft;
a fixed sheave installed to be fixed to the rotary shaft;
a moving sheave installed on the rotary shaft to face the fixed sheave such that a belt groove in which a belt is wound is formed between the moving sheave and the fixed sheave, the moving sheave including an inner sheave installed on an outer surface of the rotary shaft to be able to axially move, and an outer sheave installed to be radially stacked on the inner sheave and to be able to move in an axial direction of the rotary shaft with respect to the inner sheave; and
a moving sheave-positioning unit determining relative positions of the inner sheave and the outer sheave by being coupled simultaneously to the inner sheave and the outer sheave in a first moving mode and by being coupled to only the outer sheave in a second moving mode to be able to perform, in response to tension variation of the belt by a shift control device of an adjustable shaft center-to-center distance shift type or fixed shaft center-to-center distance shift type, the first moving mode in which the inner sheave and the outer sheave are simultaneously moved in the axial direction of the rotary shaft, and the second moving mode in which the outer sheave is moved in the axial direction of the rotary shaft with respect to the inner sheave.

2. The spring pressed variable pitch pulley of claim 1, further comprising a first elastic member supported on the rotary shaft and pressing the moving sheave toward the fixed sheave to be able to constantly apply tension to the belt wound in the belt groove formed between the moving sheave and the fixed sheave.

3. The spring pressed variable pitch pulley of claim 2, wherein the moving sheave-positioning unit includes:
a first rotary member coaxially and rotatably installed around the rotary shaft, disposed between the outer sheave and the first elastic member, transmitting elasticity of the first elastic member to the outer sheave, and moved in the axial direction of the rotary shaft together with the outer sheave by the shift control device;
a first cam mechanism provided between the first rotary member and the rotary shaft such that the first rotary member is rotated around an axis of the rotary shaft when the first rotary member is moved in the axial direction of the rotary shaft by the shift control device; and
a second cam mechanism provided between the first rotary member and the inner sheave to perform, in accordance with rotation of the first rotary member by the first cam mechanism, the first moving mode, in which the first rotary member is coupled to the inner sheave, and the inner sheave and the outer sheave are simultaneously moved together with the first rotary member in the axial direction of the rotary shaft, and the second moving mode in which the first rotary member is decoupled from the inner sheave and only the outer sheave is moved together with the first rotary member in the axial direction of the rotary shaft with respect to the inner sheave.

4. The spring pressed variable pitch pulley of claim 3, wherein the first rotary member is a first cylindrical cam.

5. The spring pressed variable pitch pulley of claim 4, wherein the first cam mechanism includes:
a first cam hole formed at a predetermined angle with respect to an axial direction on an outer circumferential surface of the first cylindrical cam in the axial direction of the first cylindrical cam; and
a first pin having a first end fixed to the rotary shaft and a second end coupled to the first cam hole, and rotating the first cylindrical cam when the first cylindrical cam is moved in the axial direction of the rotary shaft.

6. The spring pressed variable pitch pulley of claim 5, wherein the first cam hole is inclined in a direction in which the first cylindrical cam is pressed toward the fixed sheave when the first pin is supported on a wall of the first cylindrical cam, which forms the first cam hole, by rotation of the rotary shaft.

7. The spring pressed variable pitch pulley of claim 5, further comprising a second elastic member disposed between the inner sheave and the outer sheave in the axial direction of the rotary shaft such that a first end thereof is supported on the inner sheave to press the outer sheave away from the fixed sheave and a second end thereof is supported on the outer sheave to press the inner sheave toward the fixed sheave.

8. The spring pressed variable pitch pulley of claim 7, wherein elasticity of the first elastic member is greater than elasticity of the second elastic member.

9. The spring pressed variable pitch pulley of claims 5 to 8, wherein the second cam mechanism includes:
a second hole having a relief hole formed on the circumferential surface of the first cylindrical cam in the axial direction of the first cylindrical cam, and a supporting hole formed on the circumferential surface of the first cylindrical cam in a circumferential direction of the first cylindrical cam and continuously connected to a front end of the relief hole adjacent to the fixed sheave; and
a second pin having a first end fixed to the inner sheave and a second end coupled to the relief hole or the supporting hole in accordance with rotation of the first cylindrical cam.

10. The spring pressed variable pitch pulley of claim 9, wherein the second pin is fixed to a first sleeve axially extending from a rear surface of the inner sheave and movably supported on the rotary shaft.

11. The spring pressed variable pitch pulley of claim 9, wherein the first cylindrical cam is installed to be able to rotate with respect to the outer sheave.

12. The spring pressed variable pitch pulley of claim 11, further comprising:
a locking hole formed on the circumferential surface in the circumferential direction of the first cylindrical cam; and
a locking pin having a first end fixed to the outer sheave and a second end coupled to the locking hole.

13. The spring pressed variable pitch pulley of claim 12, wherein the locking pin is fixed to a second sleeve axially extending from a rear surface of the outer sheave and movably supported on an outer circumferential surface of the first sleeve.

14. The spring pressed variable pitch pulley of claim 12, wherein the first moving mode in which the first cylindrical cam presses the inner sheave toward the fixed sheave through the second pin is performed, when the second pin is positioned in the supporting hole of the first cylindrical cam in accordance with rotation of the first cylindrical cam, and
the second moving mode in which the first cylindrical cam presses the outer sheave toward the fixed sheave through the locking pin is performed when the second pin is positioned in the relief hole of the first cylindrical cam in accordance with rotation of the first cylindrical cam, and the first cylindrical cam and the inner sheave are decoupled.

15. The spring pressed variable pitch pulley of claim 4, wherein a friction reduction member for reducing friction due to rotation of the first cylindrical cam is installed between the first cylindrical cam and the first elastic member.

16. The spring pressed variable pitch pulley of claim 10, wherein a first oblong hole is formed in the first sleeve in an axial direction of the first sleeve to be able to prevent the first sleeve from being interfered with by the first pin fixed to the rotary shaft when the inner sheave is moved in the axial direction of the rotary shaft.

17. The spring pressed variable pitch pulley of claim 13, wherein a 2-1 oblong hole is formed in the second sleeve in an axial direction of the second sleeve to be able to prevent the second sleeve from being interfered with by the first pin fixed to the rotary shaft when the outer sheave is moved in the axial direction of the rotary shaft, and
a 2-2 oblong hole is formed in the second sleeve in the axial direction of the second sleeve to be able to prevent the second sleeve from being interfered with by the second pin fixed to the inner sheave when the outer sheave is moved in the axial direction of the rotary shaft.

18. A belt-pulley type continuously variable transmission comprising the spring pressed variable pitch pulley for a belt-pulley type continuously variable transmission of any one of claims 1 to 8, wherein when the shift control device is driven in an adjustable shaft center-to-center distance shift type,
the rotary shaft is a driving shaft or is coupled to a driving shaft,
an invariable pitch pulley is coupled to a driven shaft, and
a belt is wound on the spring pressed variable pitch pulley for the belt-pulley type continuously variable transmission and the invariable pitch pulley.

19. A variable pitch pulley for a belt-pulley type continuously variable transmission, the variable pitch pulley comprising:
a rotary shaft;
a fixed sheave installed to be fixed to the rotary shaft;
a moving sheave installed on the rotary shaft to face the fixed sheave such that a belt groove in which a belt is wound is formed between the moving sheave and the fixed sheave, the moving sheave including an inner sheave installed on an outer surface of the rotary shaft to be able to axially move, and an outer sheave installed to be radially stacked on the inner sheave and to be able to move in an axial direction of the rotary shaft with respect to the inner sheave; and
a shift control device determining, by rotation control, relative positions of the inner sheave and the outer sheave such that the inner sheave and the outer sheave are simultaneously moved in accordance with rotation in a third moving mode, and the inner sheave runs idle while maintaining its position and only the outer sheave is moved in accordance with rotation in a fourth moving mode in order to be able to perform any one of the third moving mode in which the inner sheave and the outer sheave are simultaneously moved in the axial direction of the rotary shaft and the fourth moving mode in which only the outer sheave is moved in the axial direction of the rotary shaft with respect to the inner sheave.

20. The variable pitch pulley of claim 19, wherein the shift control device includes:
a second rotary member including a rotation control device that generates a rotation force, and installed on the rotary shaft to be able to be rotated and coaxially run idle with respect to rotation of the rotary shaft by the rotation control device;
a first driven member having a first end cam-coupled to the second rotary shaft and a second end installed on the inner sheave to be able to run idle with respect to rotation of the inner sheave; and
a second driven member having a first end cam-coupled to the second rotary shaft and a second end installed on the outer sheave to be able to run idle with respect to rotation of the outer sheave, and
any one of the third moving mode and the fourth moving mode is performed in accordance with rotation of the second rotary member.

21. The variable pitch pulley of claim 20, wherein the second rotary member is a second cylindrical cam.

22. The variable pitch pulley of claim 21, wherein a third cam hole to which the first driven member is cam-coupled and a fourth cam hole to which the second driven member is cam-coupled are formed on a circumferential surface of the second cylindrical cam.

23. The variable pitch pulley of claim 22, wherein the third cam hole includes:
a 3-1 cam hole formed at an angle on the circumferential surface of the second cylindrical cam in an axial direction of the second cylindrical cam; and
a 3-2 cam hole continuously connected to a front end of the 3-1 cam hole, which is adjacent to the fixed sheave, and formed on the circumferential surface of the second cylindrical cam in a circumferential direction of the second cylindrical cam, and
the fourth cam hole is formed at an angle on the circumferential surface of the second cylindrical cam in the axial direction of the second cylindrical cam.

24. The variable pitch pulley of claim 23, wherein the 3-2 cam hole is formed to restrict movement of the inner sheave in the axial direction of the rotary shaft when the second cylindrical cam is rotated.

25. The variable pitch pulley of claim 23, wherein the 3-1 cam hole and the fourth cam hole have the same inclination.

26. The variable pitch pulley of claim 25, further comprising a third elastic member disposed between the inner sheave and the outer sheave in the direction of the rotary shaft such that a first end thereof is supported on the inner sheave to press the outer sheave away from the fixed sheave and a second end thereof is supported on the outer sheave to press the inner sheave toward the fixed sheave.

27. The variable pitch pulley of claim 23, wherein the first driven member is fixed to a second bearing coaxially installed on the inner sheave to be able to run idle with respect to rotation of the inner sheave, and
the second driven member is fixed to a third bearing installed on the outer sheave to be able to run idle with respect to rotation of the outer sheave.

28. The variable pitch pulley of claim 27, wherein the second bearing is installed at a third sleeve axially extending from the rear surface of the inner sheave and movably supported on the rotary shaft, and
the third bearing is fixed to a fourth sleeve axially extending from the rear surface of the outer sheave and movably supported on the third sleeve.

29. The variable pitch pulley of claim 28, wherein the first driven member is a first driven pin coupled to the third cam hole of the second cylindrical cam, and
the second driven member is a second driven pin coupled to the fourth cam hole of the second cylindrical cam.

30. The variable pitch pulley of claim 28, wherein the first driven member includes:
a first driven pin coupled to the third cam hole of the second cylindrical cam; and
a first movement transferring member having a first end fixed to the first driven pin and a second end fixed to the second bearing, and
the second driven member includes:
a second driven pin coupled to the fourth cam hole of the second cylindrical cam; and
a second movement transferring member having a first end fixed to the second driven pin and a second end fixed to the third bearing.

31. The variable pitch pulley of claim 30, wherein the first movement transferring member and the second movement transferring member are each formed in a cylindrical shape, and are coaxially disposed on the rotary shaft.

32. The variable pitch pulley of claim 31, wherein a third oblong hole is formed at the first movement transferring member in an axial direction of the first movement transferring member to be able to prevent the second movement transferring member from being interfered with by the second driven pin when the second movement transferring member is moved in the axial direction of the rotary shaft.

33. The variable pitch pulley of claim 31, wherein a fourth oblong hole is formed at the second movement transferring member in an axial direction of the second movement transferring member to be able to prevent the second movement transferring member from being interfered with by the first driven pin when the second movement transferring member is moved in the axial direction of the rotary shaft.

34. The variable pitch pulley of claim 29, wherein the first driven pin and the second driven pin are guided by a guide member such that the first driven pin and the second driven pin are prevented from circumferentially moving with respect to the rotary shaft and straightly move in the axial direction of the rotary shaft.

35. The variable pitch pulley of claim 34, wherein the guide member is arranged in the axial direction of the rotary shaft, the guide member in which a first guide hole in which the first driven pin is inserted and a second guide hole in which the second driven pin is inserted are formed.

36. The variable pitch pulley of claim 35, wherein the first guide hole and the second guide hole are formed into one hole.

37. The variable pitch pulley of claim 34, wherein the third moving mode, in which the second cylindrical cam simultaneously moves the inner sheave and the outer sheave toward the fixed sheave through the first driven pin and the second driven pin, is performed, when, in accordance with rotation of the second cylindrical cam, the first driven pin is coupled to the 3-1 cam hole of the second cylindrical cam and the second driven pin is coupled to the fourth cam hole of the second cylindrical cam, and
the fourth moving mode, in which the inner sheave to which the first driven pin is fixed is restricted in movement in the axial direction of the rotary shaft by the 3-2 cam hole formed circumferentially but the second cylindrical cam moves the outer sheave toward the fixed sheave through the second driven pin, is performed, when the 3-2 cam hole of the second cylindrical cam is coupled to the first driven pin after the second cylindrical cam keeps rotating and the 3-1 cam hole of the second cylindrical cam is separated from the first driven pin with the second driven pin coupled to the fourth cam hole of the second cylindrical cam.

38. The variable pitch pulley of any one of claims 21 to 33, wherein the second cylindrical cam is fixed to a fourth bearing coaxially installed on the rotary shaft to run idle with respect to rotation of the rotary shaft.

39. The variable pitch pulley of any one of claims 20 to 33, wherein the rotation control device is a motor or a rotary handle that is manually operated.

40. The variable pitch pulley of claim 39, wherein the rotation control device and the second cylindrical cam are worm gear-coupled.

41. The variable pitch pulley of claim 40, wherein the worm gear-coupling is implemented by:
a worm installed on a shaft of the rotation control device; and
a worm wheel coupled to the worm, installed on the second cylindrical cam, and transmitting a rotation force of the rotation control device of the worm to the second cylindrical cam.

42. The variable pitch pulley of any one of claims 19 to 33, wherein the rotary shaft is a driving shaft or is coupled to a driving shaft.

43. The variable pitch pulley of claim 42, wherein the rotary shaft of the spring pressed variable pitch pulley for a belt-pulley type continuously variable transmission of claim 1 is a driven shaft or is coupled to a driven shaft.

44. A structure of a variable pitch pulley for a belt-pulley type continuously variable transmission, the structure comprising:
a rotary shaft;
a fixed sheave installed on the rotary shaft; and
a moving sheave disposed to form a belt groove, in which a belt is wound, between the moving sheave and the fixed sheave, and installed on the rotary shaft to be able to be moved in an axial direction of the rotary shaft by a shift control device of an adjustable shaft center-to-center distance shift type or fixed shaft center-to-center distance shift type,
wherein the moving sheave includes:
an inner sheave installed to be able to move in the axial direction of the rotary shaft; and
an outer sheave supported on an outer circumferential surface of the inner sheave and installed to be able to move in the axial direction of the rotary shaft with respect to the inner sheave, and
an interface between a sheave surface of the inner sheave and a sheave surface of the outer sheave has a plurality of teeth that are engaged with each other in circumferential directions of the inner sheave and the outer sheave when the sheave surface of the outer sheave and the sheave surface of the inner sheave are aligned to form one sheave surface by the shift control device.

45. The structure of claim 44, wherein the teeth are continuously connected curves.

46. The structure of claim 44, wherein an edge of the sheave surface of the inner sheave and an edge of the sheave surface of the outer sheave that form the interface are machined into curved surfaces.

47. The structure of claim 44, wherein a radial variation width of the interface formed by engagement of teeth of the inner sheave and teeth of the outer sheave is smaller than a height of the belt.

48. The structure of claim 44, wherein teeth formed at the inner sheave and teeth formed at the outer sheave make pairs, and have the number of teeth of at least three pairs.

49. The structure of claim 44, wherein a groove having the same shape as the interface is formed on a sheave surface of the fixed sheave that corresponds to the interface of the outer sheave.

50. A spring pressed variable pitch pulley for a belt-pulley type continuously variable transmission, the spring pressed variable pitch pulley comprising:
a rotary shaft;
a fixed sheave fixed the rotary shaft; and
a moving sheave forming a belt groove, in which a belt is wound, between the moving sheave and the fixed sheave, and installed on the rotary shaft to be able to move in an axial direction of the rotary shaft with respect to the fixed sheave,
wherein the moving sheave includes an inner sheave installed to be able to move in the axial direction of the rotary shaft and an outer sheave disposed outside the inner sheave and being able to move in the axial direction with respect to the inner sheave, and
the spring pressed variable pitch pulley includes:
a first elastic member pressing the moving sheave toward the fixed sheave and axially deformed in response to tension variation of the belt by a shift control device; and
a moving sheave-positioning unit transmitting elasticity of the first elastic member to both the inner sheave and the outer sheave or only to the outer sheave.

51. The spring pressed variable pitch pulley of claim 50, wherein the moving sheave-positioning unit includes:
a first cam mechanism converting the elasticity of the first elastic member that is applied in the axial direction of the first rotary shaft or an impellent force that is applied in the axial direction of the rotary shaft from the shift control device into a rotation motion around the axis of the rotary shaft and a straight motion in the axial direction of the rotary shaft; and
a second cam mechanism transmitting a force to both the inner sheave and the outer sheave or only to the outer sheave in accordance with the first cam mechanism.

52. The spring pressed variable pitch pulley of claim 51, wherein the first cam mechanism includes: a first cylindrical cam having a first cam hole provided at an angle in the axial direction of the rotary shaft; and a first pin having a first end fixed to the rotary shaft and a second end positioned in the first cam hole,
the second cam mechanism includes a second cam hole provided at the first cylindrical cam, and a second pin having a first end fixed to the inner sheave and a second end positioned in the second cam hole, and
the second cam hole includes a relief hole axially provided and a supporting hole connected to the relief hole and circumferentially provided.

53. The spring pressed variable pitch pulley of claim 52, wherein the second cam hole includes a relief hole axially provided and a supporting hole connected to the relief hole and circumferentially provided.

54. The spring pressed variable pitch pulley of claim 53, wherein the spring pressed variable pitch pulley has a locking hole provided at the first cylindrical cam and a locking pin having a first end fixed to the outer sheave and a second end positioned in the locking hole, and the locking hole is circumferentially provided.

55. The spring pressed variable pitch pulley of any one of claims 50 to 54, wherein a second elastic member is provided between the inner sheave and the outer sheave.

56. A variable pitch pulley for a belt-pulley type continuously variable transmission, the variable pitch pulley comprising:
a rotary shaft;
a fixed sheave fixed the rotary shaft; and
a moving sheave forming a belt groove, in which a belt is wound, between the moving sheave and the fixed sheave, and installed on the rotary shaft to be able to move in an axial direction of the rotary shaft with respect to the fixed sheave,
wherein the moving sheave includes an inner sheave installed to be able to move in the axial direction of the rotary shaft and an outer sheave disposed outside the inner sheave and being able to move in the axial direction with respect to the inner sheave, and
the variable pitch pulley includes a shift control device of a rotation control type generating a rotation force, converting the generated rotation force into a straight motion parallel with the rotary shaft, and transmitting the straight motion to both the inner sheave and the outer sheave or only to the outer sheave.

57. The variable pitch pulley of claim 56, wherein the shift control device includes:
a second cylindrical cam having a rotation control device that generates a rotation force, provided to be able to run idle with the rotary shaft, and having a third cam groove and a fourth cam groove;
a first driven pin having a first side connected to the inner sheave to be able to run idle with the inner sheave and a second side positioned in the third cam groove; and
a second driven pin having a first side connected to the outer sheave to be able to run idle with the outer sheave and a second side positioned in the fourth cam groove.

58. The variable pitch pulley of claim 57, wherein the third cam hole includes a 3-1 cam hole provided at an angle in an axial direction of the second cylindrical cam and a 3-2 cam hole connected to the 3-1 cam hole adjacent to the fixed sheave and provided in a circumferential direction of the second cylindrical cam, and
the fourth cam hole is provided at an angle in the axial direction of the second cylindrical cam.

59. The variable pitch pulley of claim 58, wherein the 3-1 cam hole and the fourth cam hole have the same inclination.

60. The variable pitch pulley of claim 59, wherein a second bearing is provided at the inner sheave so that the first driven pin run idles with respect to the inner sheave, and
a third bearing is provided at the outer sheave so that the second driven pin run idles with respect to the outer sheave.

61. The variable pitch pulley of claim 60, wherein a third sleeve axially extending from a rear surface of the inner sheave is provided at the inner sheave and the second bearing is provided at the third sleeve; and
a fourth sleeve axially extending from a rear surface of the outer sheave is provided at the outer sheave and the third bearing is provided at the fourth sleeve.

62. The variable pitch pulley of claim 61, wherein a guide member is provided outside the third cylindrical cam to prevent the first driven pin and the second driven pin from moving in a circumferential direction with respect to the rotary shaft.

63. The variable pitch pulley of claim 62, wherein the guide member is arranged in the axial direction of the rotary shaft and includes a first guide hole in which the first driven pin is inserted and a second guide hole in which the second driven pin are inserted.

64. The variable pitch pulley of any one of claims 56 to 63, wherein the rotation control device is a motor or a rotary handle that is manually operated.

65. The variable pitch pulley of claim 64, wherein the rotation control device and the second cylindrical cam are worm gear-coupled.

66. The variable pitch pulley of claim 65, wherein a worm is provided on a shaft of the rotation control device and a worm wheel is provided on the second cylindrical cam.

67. A pulley structure of a variable pitch pulley for a belt-pulley type continuously variable transmission, the pulley structure comprising:
a rotary shaft;
a fixed sheave fixed the rotary shaft; and
a moving sheave including an inner sheave provided to be able to move in an axial direction of the rotary shaft and an outer sheave provided to be able to move in the axial direction with respect to the inner sheave,
wherein a convex portion or a concave portion is provided on an outer circumferential surface of the inner sheave, and a convex portion or a concave portion that corresponds to the convex portion or the concave portion is provided on an inner circumferential surface of the outer sheave.

68. The pulley structure of claim 67, wherein the convex portion or the concave portion is a combination of curves.

69. A spring pressed variable pitch pulley for a belt-pulley type continuously variable transmission, the spring pressed variable pitch pulley comprising:
a rotary shaft;
a fixed sheave installed to be fixed to the rotary shaft;
a moving sheave disposed to form a belt groove, in which a belt is wound, between the moving sheave and the fixed sheave, and including an inner sheave installed to be able to move in an axial direction of the rotary shaft and an outer sheave installed on the inner sheave and installed to be able to move in the axial direction of the rotary shaft with respect to the inner sheave;
a first elastic member pressing the moving sheave toward the fixed sheave;
a rotary body installed between the moving sheave and the first elastic member to be able to be moved and rotated along an axis of the rotary shaft in response to tension variation of the belt by a shift control device of an adjustable shaft center-to-center distance shift type or fixed shaft center-to-center distance shift type;
a first cam mechanism provided at the rotary body and the rotary shaft to be able to rotate the rotary body around the rotary shaft in accordance with axial movement of the rotary body; and
a second cam mechanism provided at the rotary body and the inner sheave to be able to be coupled to both the outer sheave and the inner sheave or only to the outer sheave in accordance with rotation of the first cam.

70. The spring pressed variable pitch pulley of claim 69, wherein the rotary body is a cylindrical cam.

71. The spring pressed variable pitch pulley of claim 70, wherein the first cam mechanism includes: a first cylindrical cam having a first cam hole provided at an angle in the axial direction of the rotary shaft; and a first pin having a first end fixed to the rotary shaft and a second end positioned in the first cam hole.

72. The spring pressed variable pitch pulley of claim 71, wherein the second cam mechanism includes a second cam hole provided at the first cylindrical cam, and a second pin having a first end fixed to the inner sheave and a second end positioned in the second cam hole, and
the second cam hole includes a relief hole axially provided and a supporting hole connected to the relief hole and circumferentially provided.

73. The spring pressed variable pitch pulley of claim 72, wherein the second cam hole includes a relief hole axially provided and a supporting hole connected to the relief hole and circumferentially provided.

74. The spring pressed variable pitch pulley of any one of claims 70 to 73, wherein the spring pressed variable pitch pulley has a locking hole provided at the first cylindrical cam and a locking pin having a first end fixed to the outer sheave and a second end positioned in the locking hole, and the locking hole is provided in a circumferential direction.
